# EUROPEAN PATENT SPECIFICATION

(11) **EP 4 203 392 B1**
(45) Date of publication and mention of the grant of the patent: **11.09.2024**
(21) Application number: 22150290.9
(22) Date of filing: 05.01.2022
(51) Int. Cl.: H04L 9/40, H04W 12/06, H04W 12/08, H04W 12/033

(54) **AUTHENTICATION SUPPORT FOR AN ELECTRONIC DEVICE TO CONNECT TO A TELECOMMUNICATIONS NETWORK**
AUTHENTIFIZIERUNGSUNTERSTÜTZUNG FÜR EINE ELEKTRONISCHE VORRICHTUNG ZUR VERBINDUNG MIT EINEM TELEKOMMUNIKATIONSNETZ
SUPPORT D'AUTHENTIFICATION POUR LA CONNEXION D'UN DISPOSITIF ÉLECTRONIQUE À UN RÉSEAU DE TÉLÉCOMMUNICATIONS

(30) Priority: 27.12.2021 US 202163266036 P
(43) Date of publication of application: 28.06.2023
(73) Proprietor: Koninklijke KPN N.V., 3072 AP Rotterdam (NL); Nederlandse Organisatie voor toegepast-natuurwetenschappelijk Onderzoek TNO, 2595 DA 's-Gravenhage (NL)
(72) Inventor: Keesmaat, Nicolaas, 2272 TS Voorburg (NL); Norp, Antonius, 2584 EN The Hague (NL); Manganahalli Jayaprakash, Sandesh, 2262GT Leidschendam (NL)
(74) Representative: Wuyts, Koenraad Maria

(56) References cited:
- WO-A1-2021/245629
- WO-A2-2010/056944
- US-A1- 2016 352 734

## Description

### TECHNICAL FIELD

The present disclosure relates to an electronic device, an authentication support system and a telecommunication system to provide access for the electronic device to a telecommunications network and methods therefore. In particular, the disclosure relates to an electronic device, an authentication support system and a telecommunication system, wherein the electronic device does not have a subscription in a telecommunications network yet is able to access this telecommunications network.

### BACKGROUND

Electronic devices may be connected to a gateway device to obtain services from or over a telecommunications network. An example of such a service is internet access. Typically, these electronic devices communicate with the telecommunications network via the gateway device over a first network, for example a local customer premises network, such as a Wireless Local Area Network (WLAN). Another example is a personal Internet of Things, loT, network wherein several, possibly wearable, electronic devices communicate with the telecommunications network via a user equipment, UE. Still another example involves a gateway device provisioned in a mobile vehicle connecting several electronic devices in the vehicle to the telecommunications network. For that purpose, in each of these examples, the gateway device has a subscription in the telecommunications network and acts as a gateway to the telecommunications network. Advantageously, in this manner, the electronic devices behind the communications device are not required to have an individual subscription for accessing the telecommunications network and do not need to contain a security module, such as a User Subscriber Identity Module, USIM.

Prior art patent documents: WO 2010/056944 A2, WO 2021/245629 A1, and US 2016/0352734 A1, disclose methods for supporting authentication of electronic devices that do not have a subscription.

### SUMMARY

The invention is set out in the appended set of claims.

The inventors have considered that it is desirable in some instances that the electronic devices, that conventionally depend on the gateway device for access to the telecommunications network, can access the telecommunications network without the gateway device despite the lack of a subscription to access the telecommunications network. It is noted that the electronic device cannot simply use the subscription of the gateway device directly, because the connection of the gateway device to the telecommunications network needs to be maintained for the benefit of other electronic devices that continue communication via the gateway device.

To this end, the present disclosure pertains to an electronic device configured to communicate over a first network with an authentication support system and over a second network with a telecommunication system via a gateway device. The electronic device does not have a subscription for access to the second network, whereas the gateway device, or another device, has a subscription to access the second network. The subscription to access the second network includes a gateway device identifier and at least one associated gateway device credential known, e.g. stored, in the telecommunication system. The authentication support system may obtain the gateway device identifier and the associated gateway device credential of the gateway device.

The electronic device is configured to provide an electronic device identifier over the first network, which may be a local network, such as a customer premises network or personal loT network, to the authentication support system. The electronic device is also configured to receive at least a derived device identifier and a derived device credential from the authentication support system over the first network. The derived device identifier is based on at least the gateway device identifier and the electronic device identifier. The derived device credential is based on at least the gateway device credential and the electronic device identifier.

The derived device identifier is stored, temporarily or permanently, in the electronic device to enable the electronic device to include the derived device identifier in a network access request. The electronic device is configured to include the derived device identifier in the network access request and transmit the network access request including the derived device identifier to the second network. In one embodiment, the derived device identifier includes the electronic device identifier and, possibly, the gateway device identifier. For example, the derived device identifier may be a combination of the gateway device identifier and the electronic device identifier.

The derived device credential is also stored, temporarily or permanently, in the electronic device to enable the electronic device to participate in an authentication procedure with the telecommunication system. In one embodiment, the derived device credential is used as a standardized credential (such as the long-term key) in a standardized authentication procedure. e.g., according to 3GPP TS 33.102, TS 33.401, or TS 33.501.

The electronic device is configured to participate in the authentication procedure with the telecommunication system over the second network in response to the network access request and to use the derived device credential received in the authentication procedure with the telecommunication system.

Furthermore, the present disclosure relates to an authentication support system configured to communicate over a first network with an electronic device, wherein the electronic device is able to communicate with a telecommunication system over a second network via a gateway device and has no subscription for access to the second network. In such a system, the gateway device has a subscription to access the second network. The subscription includes a gateway device identifier and at least one associated gateway device credential known in the telecommunication system.

The authentication support system is configured to receive an electronic device identifier from the electronic device over the first network. The authentication support system is configured to obtain the gateway device identifier and the associated gateway device credential of the gateway device. The authentication support system is configured to perform an authentication support function to enable the electronic device to access the second network using a network access request. The authentication support function provides at least a derived device identifier and a derived device credential. The derived device identifier is based on at least the gateway device identifier and the electronic device identifier. The derived device credential is based on at least the gateway device credential and the electronic device identifier. In one embodiment, the derived device identifier includes the electronic device identifier and, possibly, the gateway device identifier.

At least one of the derived device identifier and the derived device credential may be generated in response to receiving the electronic device identifier from the electronic device. At least one of the derived device identifier and the derived device credential may be pre-stored, in case the electronic device identifier is already known to the authentication support function, for example by manual configuration by a user, or previous detection of the electronic device identifier in the first network.

The authentication support system is also configured to transmit the derived device identifier and the derived device credential over the first network to the electronic device.

Yet another aspect of the present disclosure involves a telecommunication system for a second network storing a subscription of a gateway device. The telecommunication system may also be referred to as telecommunication authentication system, i.e. a system for a telecommunication network enabling authenticating the electronic device for access to said network. The telecommunication system may be connected to the second network in which case communications are over the second network or be part of the second network wherein communications are received over (through) the second network. The telecommunication system comprises, preferably, at least a subscription database and processing means to enable the electronic device to authenticate in the second network. The subscription of the gateway device includes a gateway device identifier and at least one associated gateway device credential. The telecommunication system is configured to receive a network access request over the second network from an electronic device not having a subscription for access to the second network. The telecommunication system is configured to recognize a derived device identifier in the network access request. The derived device identifier may be obtained by the electronic device prior to the network access request based on at least the gateway device identifier and an electronic device identifier in an authentication support system communicating with the electronic device over a first network.

The telecommunication system is configured to determine the gateway device credential using at least the derived device identifier and the gateway device identifier. In one embodiment, the telecommunication system is configured to obtain the gateway device identifier based on the derived device identifier and subsequently obtain the gateway device credential based on the obtained gateway device identifier stored as part of the subscription in the telecommunication system. The telecommunication system is also configured to obtain a derived device credential for the electronic device based on at least the gateway device credential and the electronic device identifier.

The telecommunication system is configured to participate in an authentication procedure with the electronic device over the second network after receiving the network access request and use the derived device credential in the authentication procedure with the electronic device.

A further aspect of the present disclosure regards a system comprising at least two of the electronic device, the authentication support system and the telecommunication system as defined herein. Thus, the present disclosure also pertains to, for example, a system comprising an electronic device and an authentication support system as defined herein, a system comprising an electronic device and a telecommunication system as defined herein, a system comprising an authentication support system and a telecommunication system and/or a system comprising an electronic device, an authentication support system and a telecommunication system as defined herein.

One further example of the present disclosure pertains to a method for an electronic device to access a second network, such as a telecommunications network, without having a subscription for access to the second network. The electronic device is configured to communicate over a first network with an authentication support system and over the second network with a telecommunication system via a gateway device that has a subscription to access the second network. The subscription in the second network may include a gateway device identifier and at least one associated gateway device credential known, e.g. stored, in the telecommunication system. The authentication support system can obtain the gateway device identifier and the associated gateway device credential of the gateway device.

The method for the electronic device includes the step of providing an electronic device identifier over the first network, which may be a local network, such as a customer premises network or personal loT network, to the authentication support system. The method also includes receiving at least a derived device identifier and a derived device credential from the authentication support system over the first network. The derived device identifier may be based on at least the gateway device identifier and the electronic device identifier. The derived device credential may be based on at least the gateway device credential and the electronic device identifier.

The method may further include storing, at least temporarily, the derived device identifier and to include the derived device identifier in a network access request. A still further step may pertain to transmit the network access request including the derived device identifier to the second network. In one embodiment, the derived device identifier includes the electronic device identifier. For example, the derived device identifier may be a combination of the gateway device identifier and the electronic device identifier.

The method may further include storing, at least temporarily, the derived device credential in the electronic device to enable the electronic device to participate in an authentication procedure with the telecommunication system.

The method may further include participating in the authentication procedure with the telecommunication system over the second network in response to the network access request and using the derived device credential received in the authentication procedure with the telecommunication system.

Still another example of the present disclosure relates to a method for an authentication support system to support an electronic device to access a second network, such as a telecommunications network, without having a subscription for access to the second network. The second network contains or is connected to a telecommunication system that contains a subscription for a gateway device. The subscription may include a gateway device identifier and at least one associated gateway device credential known, e.g. stored, in the telecommunication system.

The method for the authentication support system includes the step of receiving an electronic device identifier from an electronic device over a first network and of obtaining the gateway device identifier and the associated gateway device credential of the gateway device. The method may also include performing an authentication support function to enable the electronic device to access the second network using a network access request. The method may contain the authentication support function providing at least a derived device identifier and a derived device credential. The derived device identifier may be based on at least the gateway device identifier and the electronic device identifier. The derived device credential may be based on at least the gateway device credential and the electronic device identifier. In one embodiment, the derived device identifier includes the electronic device identifier. At least one of the derived device identifier and the derived device credential may be generated in response to receiving the electronic device identifier. The method may also include the step of transmitting the derived device identifier and the derived device credential over the first network to the electronic device.

Yet another example of the present disclosure involves a method in a telecommunication system storing a subscription of a gateway device. The telecommunication system may be connected to the second network in which case communications are over the second network or be part of the second network wherein communications are received over (through) the second network. The subscription of the gateway device may include a gateway device identifier and at least one associated gateway device credential.

The method in the telecommunication system involves the step of receiving a network access request over the second network from an electronic device not having a subscription for access to the second network. The method also involves recognizing a derived device identifier in the network access request. The derived device identifier may be obtained based on at least the gateway device identifier and an electronic device identifier in an authentication support system communicating with the electronic device over a first network.

Another step in the method may involve determining the gateway device credential using at least the derived device identifier and the gateway device identifier. In one embodiment, the method involves obtaining the gateway device identifier based on the derived device identifier and subsequently obtaining the gateway device credential based on the obtained gateway device identifier from the subscription stored in the telecommunication system. The telecommunication system may also perform the step of obtaining a derived device credential for the electronic device based on at least the gateway device credential and the electronic device identifier.

Also, a step in the method may involve the telecommunication system participating in an authentication procedure with the electronic device over the second network after receiving the network access request and use the derived device credential in the authentication procedure with the electronic device.

The disclosed electronic device, authentication support system and telecommunication system facilitate authentication of the electronic device in the second network without a need for the electronic device to have a subscription (an identifier and credential(s)) for access to the second network. This enables the electronic device to function independently of the gateway device. The second network, such as a telecommunication network, may require mutual authentication between an electronic device and the network.

The electronic device may instead obtain a derived subscription, possibly temporarily, from an authentication support system that has access to an original subscription, for example of the gateway device, by sending a request for the derived subscription parameters. The receipt of the electronic device identifier obtained from the electronic device may be interpreted by the authentication support systems as the request for the derived subscription parameters. By using derived subscription parameters, for example, a derived device identifier and a derived device credential, and involving the electronic device identifier in the function to obtain the derived subscription parameters, these parameters can be made specific for the electronic device. The derived subscription parameters may be provided to the electronic device to facilitate access and authentication in the second network.

In an alternative example, the authentication support system may have access to an original subscription of a subscribed device other than the gateway device, for example a subscription of the authentication support system itself, or of a mobile device (different from the gateway device). In this alternative example, the authentication support system may be configured to obtain the device identifier and associated device credential of the original subscription of the subscribed device. The authentication support function again provides at least a derived device identifier and a derived device credential to the electronic device to access the second network. The derived device identifier may be based on at least the subscribed device identifier and the electronic device identifier. The derived device credential may be based on at least the subscribed device credential and the electronic device identifier. Methods and steps described elsewhere can also be performed in the same manner, as long as the gateway device identifier is replaced by the subscribed device identifier, and the gateway device credential by the subscribed device credential.

It is noted that the electronic device not having a subscription for access to the second network does not mean that the electronic device cannot transmit a network access request and, maybe, have the authentication procedure performed. The electronic device does not have original subscription parameters stored in the telecommunication system and, hence, needs derived subscription parameters for successful access to the network, so that it can obtain services from this network.

It is noted that communication between the electronic device and the authentication support system is over a first network distinct from the second network. The first network may involve a single communication link, such as a Bluetooth connection or wired connection, between the electronic device and the authentication support system. Alternatively, both the electronic device and the authentication support system may be connectable in a multi-node network, possibly also including the gateway device. An example is a customer premises network, such as a WLAN.

It should also be appreciated that a derived subscription parameter comprises a derived device identity or a derived device credential. Such parameters are said to be derived because the parameters are generated in the authentication support system based on input of at least the original subscription parameters of a device, e.g. a gateway device, known in the second network.

It should also be noted that the telecommunication system is not required to store the derived device identifier and/or the derived device credential after having generated the authentication vector. One or both may be discarded. However, the telecommunication system may also store one or both (at least for some time) to facilitate re-authentication.

It should also be noted that the gateway device credential may be a long-term key stored in e.g. a USIM or a credential that is derived from this long-term key. Such derivation may take place in the gateway device or in the authentication support system obtaining the long-term key. This further protects the long-term key from malicious attempts to retrieve the long-term key from the derived device credential. In one embodiment a credential derived from a long-term key may be using a Key Derivation Function (KDF) as described in 3GPP TS 33.102, TS 33.401, or TS 33.501.

It should be noted that a credential in the present disclosure may comprise a set of credentials.

In one embodiment, the derived device identifier may be based on at least the gateway device identifier, the electronic device identifier and an additional changeable value and/or the derived device credential may be based on at least the gateway device credential, the electronic device identifier and the additional changeable value. For example, the derived device identifier may be a combination of the gateway device identifier, the electronic device identifier and the selected additional value. The additional, changeable, value may comprise a random value. The authentication support system may be configured to store or generate the additional changeable value and use this value for deriving the derived device identifier and the derived device credential. The additional value may be changed each time a request is received for a derived device identifier and/or a derived device credential, e.g. by receiving an electronic device identifier from the electronic device. Likewise, the telecommunication system may be configured to process, or retrieve, the additional value from the derived device identifier received from the electronic device over the second network to finally obtain the derived device credential for the authentication procedure.

Using the additional value for the derived device identifier and derived device credential facilitates changing the derived device identifier and derived device credential to enhance security, which may be advisable in the absence of a security device running a USIM for the electronic device.

In one embodiment, a validity parameter may be applied that is indicative of a validity of at least one of the derived device identifier and the derived device credential.

In one embodiment, the electronic device may be configured to provide the validity parameter to the telecommunication system over the second network in protected form for integrity protection. One embodiment may be encryption. Such protection may be arranged using public key or symmetrical key mechanisms.

In one embodiment, the authentication support system may be configured to transmit the validity parameter to the electronic device and the electronic device may be configured to receive and process the validity parameter from the authentication support system. The embodiment ensures control by the authentication support system of the validity of the at least one of the derived device identifier and the derived device credential.

In one embodiment, the electronic device may be configured to include the validity parameter in the network access request to the second network and the telecommunication system may be configured to receive and process the validity parameter. In this manner, the telecommunication system may be informed on the validity and can decide when a new network access request is required from the electronic device.

In one embodiment, the electronic device and/or the authentication support system may be configured to provide the validity parameter to the second network after transmission of the network access request from the electronic device. The embodiment allows transmission of the validity parameter over a separate, possibly secure, channel.

Irrespective of how the telecommunication system receives the validity parameter, the telecommunication system may be configured, in one embodiment, to refuse the network access request based on the validity parameter.

In one embodiment, the telecommunication system provides the validity parameter to the authentication support system to enable the authentication support system to inform the electronic device on the validity of the derived device identifier and/or the derived device credential. This embodiment allows control from the telecommunications network on the validity of at least one of the derived device identifier and the derived device credential and enables timely action between the authentication support system and the electronic device.

In one embodiment, the validity parameter is a validity time parameter indicative of a validity time of at least one of the derived device identifier and the derived device credential.
The validity time parameter may be indicative of a validity time that limits the duration for the validity of the derived device identifier and/or the derived device credential so that these cannot be used indefinitely. When the validity time expires, has expired or is about to expire, the electronic device may need a fresh identity and fresh credential to continue the access to the second network or to re-access the second network. There are many options to implement a validity time parameter. Validity time may be defined as an absolute time, for example a clock time, GPS time and/or network time, or as a counter, counting e.g. the number of access requests using the derived subscription parameters. Validity time may be defined as a relative time, for example a countdown clock or a validity period. A relative time may be defined to start from the moment of creation of the derived subscription parameters, or may be defined to start when the derived device identifier is first used in for example a network access request to the telecommunication system, or the start of the validity time may be triggered by the electronic device, the telecommunication system and/or the authentication support system. Also multiple validity time parameters may apply to the derived subscription parameters for different purposes.

In one embodiment, the electronic device is configured to receive a further derived device identifier and/or a further derived device credential from the authentication support system, for example at expiry of the validity time, and to transmit a further network access request over the second network including the received further derived device identifier and/or further derived device credential in the further network access request. For example, the further derived device credential may be derived based on a different, further additional changeable value, whereas the derivation function and other input values may remain the same. The electronic device may receive the further derived device identifier and/or further derived device credential prior to expiry of the validity time, for example shortly before expiry of the validity time. The electronic device may also receive the further identified device identifier and/or further derived device credential after expiry of the validity time, for example shortly after expiry of the validity time. It is noted that as long as access to the network is maintained for the electronic device, no need for new derived subscription parameters may be necessary, so that expiry of the validity time would not immediately terminate access for the electronic device to the second network. In one embodiment, the electronic device may receive the further derived device identifier and/or further derived device credential outside the coverage of the first network, for example over the second network, such that the electronic device may continue access without a need to be in the vicinity of the authentication support system. Also, the electronic device may receive further derived subscription parameters, or even multiple sets of further derived subscription parameters, for later use, for example when subscription parameters are derived in batch, as described below.

In one further embodiment, the validity time parameter would comprise a derivation time of derivation of at least one of the derived device identifier and the derived device credential. The telecommunication system may use the derivation time to decide whether it can consider the derived device identifier as valid, for example by implementing a policy for the time difference between the derivation time and the time of receipt of the network access request. Such a time parameter may be beneficial for pre-stored derived subscription parameter(s).

In one embodiment, the authentication support system may be configured to at least partly encrypt the derived device identifier and/or derived device credential and to transmit the at least partly encrypted derived device identifier and/or the at least partly encrypted derived device credential over the first network to the electronic device. Likewise, the electronic device may be configured to receive the at least partly encrypted derived device credential and/or the at least partly encrypted derived device credential over the first network from the authentication support system and include the at least partly encrypted derived device identifier in the network access request. The electronic device may need to decrypt the derived device credential for the authentication procedure. The embodiment facilitates secure transmission of at least one of the derived subscription parameters over the first network, such as a local WLAN network. Likewise, the telecommunication system is configured to decrypt the at least partly encrypted derived device identifier in the network access request and process the decrypted derived device identifier. The embodiment facilitates privacy and/or secure transmission of the derived device identifier over the second network, such as the telecommunications network. Encryption may be done with a public key from the telecommunication system, such that (only) the telecommunication system can decrypt. In this manner, the derived device identifier is avoided to be sent in clear over the radio access network. In one embodiment the public key used to encrypt the derived device identifier is the 5G Home Network Public Key as described in 3GPP TS 33.501.

In one embodiment, the at least partly encrypted derived device identifier and/or derived device credential are prestored in the authentication support system, i.e. the authentication support system may be configured to pre-store derived subscription parameters and to encrypt these in advance, i.e. before the electronic device requests the derived subscription parameters. This embodiment facilitates calculation of encrypted derived subscription parameters at an appropriate time, so that encryption processing power and/or time is not required when the derived subscription parameters are needed, which may be beneficial when the authentication support system is, for example, part of a mobile device, such as a mobile phone. For the same reason it also facilitates calculation in a batch of multiple sets of encrypted derived subscription parameters at an appropriate time.

In one embodiment, the electronic device may be configured to provide the electronic device identifier to the authentication support system in a secure manner over the first network. Likewise, the authentication support system may be configured to receive the electronic device identifier from the electronic device in a secure manner over the first network. Protection of the communication may include at least one of integrity protection, confidentiality protection, replay protection. The embodiment facilitates security of the derived subscription parameters since these parameters apply the electronic device identifier as input for the generation of the derived subscription parameters. A variety of options has been considered by the inventors for secure transmission, including pairing the electronic device and the authentication support system when in close vicinity to each other (e.g. by pushing a button on one or both sides), establishing a filter in the authentication support system enabling the system to only permit transmission of the derived subscription parameters for particular electronic device identifiers (such as MAC addresses) or configuring a portal for the authentication support system on which an association between the gateway device and at least one electronic device can be set.

In one embodiment, the first network is a local network and the electronic device identifier is a local network identifier, such as a MAC address, of the electronic device. Local network identifiers may be unique in the local network, so that different derived subscription parameters may be generated.

In one embodiment, the authentication support system is accommodated in the gateway device, e.g. in a residential gateway device or in a mobile device, such as a user equipment, UE. Such integration may facilitate secure access for the authentication support system to the gateway device identifier and/or the gateway device credential. For example, derivation of subscription parameters by the authentication support function may be performed in a secured part of the gateway device, such as in a Universal Integrated Circuit Card (UICC).

In one embodiment, the authentication support system is configured to obtain the gateway device identifier and the associated gateway device credential over the first network. Obtaining the gateway device identifier and/or the at least one associated gateway device credential may be in a secure manner. The first network provides an option to obtain the gateway device identifier and the at least one associated gateway device credential when the gateway device and authentication support system are separate.

In one embodiment, the electronic device may be configured to construct the network access request so that the telecommunication system can recognize the derived device identifier in the network access request. Likewise, the telecommunication system may be configured to recognize the derived device identifier in the received network access request. The presence of a derived device identifier may be signaled, for example, by a flag set in the network access request, a certain value in a field (e.g. a type field) of the network access request or a format of the derived device identifier.

It may occur that the telecommunications network detects that a re-authentication is necessary, for example when an authentication timer expires or when operator conditions are met. In one embodiment, the electronic device may be configured to participate in a re-authentication procedure with the telecommunication system using the derived device credential. Likewise, the telecommunication system may be configured to participate in a re-authentication procedure with the electronic device using the derived device credential. The embodiment enables re-use of the derived device credential for re-authentication, when this derived device credential is not discarded in the telecommunication system after initial authentication. If the derived device credential is not available in the telecommunication system, the telecommunication system may be configured to re-calculate the derived device credential for the re-authentication procedure based on derived device identifier. The derived device identifier may have been stored from a previous network access request of the electronic device.

The electronic device may be configured to send a network access request to a second network, such as a telecommunications network. For example, the telecommunications network may comprise a 3G (UMTS) network or a 4G (LTE) network. For such networks, the electronic device may be configured to transmit a network attach request comprising an IMSI field with a derived device identifier. In one further embodiment, the second network is a 5G telecommunications network. For this further embodiment, the gateway device identifier may be a Subscription Permanent Identifier, SUPI. The network access request is a registration request from the electronic device to a system running an Access and Mobility management Function, AMF, in the 5G telecommunications network. In one embodiment, the derived device identifier has a SUPI format. In one embodiment, the SUPI format type field signals the presence of the derived device identifier to the telecommunications system. In one embodiment, the SUPI format of the derived device identifier is extended or reused so that the derived device identifier is comprised of a combination of at least the electronic device identifier, and the gateway device identifier. In one embodiment, the derived device identifier is partially encrypted in a concealed SUPI format, SUCI.

In one embodiment, the authentication support system may be configured to store at least one of the derived device identifier, the derived device credential and a validity parameter indicative of a validity of at least one of the derived device identifier and the derived device credential, such as a validity time parameter described herein. The authentication support system may be configured to provide at least one of the stored derived device identifier, the derived device credential and validity parameter to the telecommunication system in a procedure separate from the authentication procedure. Likewise, the telecommunication system may be configured to obtain at least one of the stored derived device identifier, the derived device credential and a validity parameter indicative of a validity of at least one of the derived device identifier and the derived device credential from the authentication support system in a procedure separate from the authentication procedure. The embodiment facilitates an additional verification process by the telecommunication system independent from the electronic device.

In one embodiment, the authentication support system is configured to perform the authentication support function by executing a one-way function to obtain the derived device credential from at least the gateway device credential and the electronic device identifier. Likewise, the telecommunication system is configured to execute a one-way function to obtain the derived device credential from at least the gateway device credential and the electronic device identifier. The embodiment may prevent deriving the at least one gateway device credential from the derived device credential, which can be stored and/or use in a less secure fashion. In one embodiment the one-way function is the Key Derivation Function (KDF) defined in 3GPP TS 33.102, TS 33.401 or TS 33.501.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1 is a schematic illustration of a 3G/4G telecommunications network architecture according to the prior art;
FIG. 2A is a schematic illustration of a 5G telecommunications network architecture according to the prior art;
FIG. 2B is a schematic illustration of systems of the user plane and control plane for a 5G telecommunications network and a user equipment;
FIG. 2C is a schematic illustration of some steps of an access and mobility request procedure in a 5G telecommunications network according to the prior art;
FIG. 3 is a schematic illustration of of a local customer network configured for communication with a 5G telecommunications network as shown in FIGS. 2A-2C.
FIGS. 4A and 4B provide a schematic illustration of an electronic device, an authentication support system and a telecommunications system and a process chart illustrating steps to use these;
FIG. 4C is a process chart illustrating some steps for refreshing the derived subscription parameters;
FIGS. 5A and 5B provide a schematic illustration of an electronic device, an authentication support system and a telecommunications system in a 5G telecommunications network and a process chart illustrating steps to use these;
FIG. 5C is a schematic illustration of some fields of a registration request of an electronic device containing a derived subscription parameter; and
FIG. 6 depicts a processing system according to an embodiment for a processing device or a server system.

### DETAILED DESCRIPTION OF THE DRAWINGS

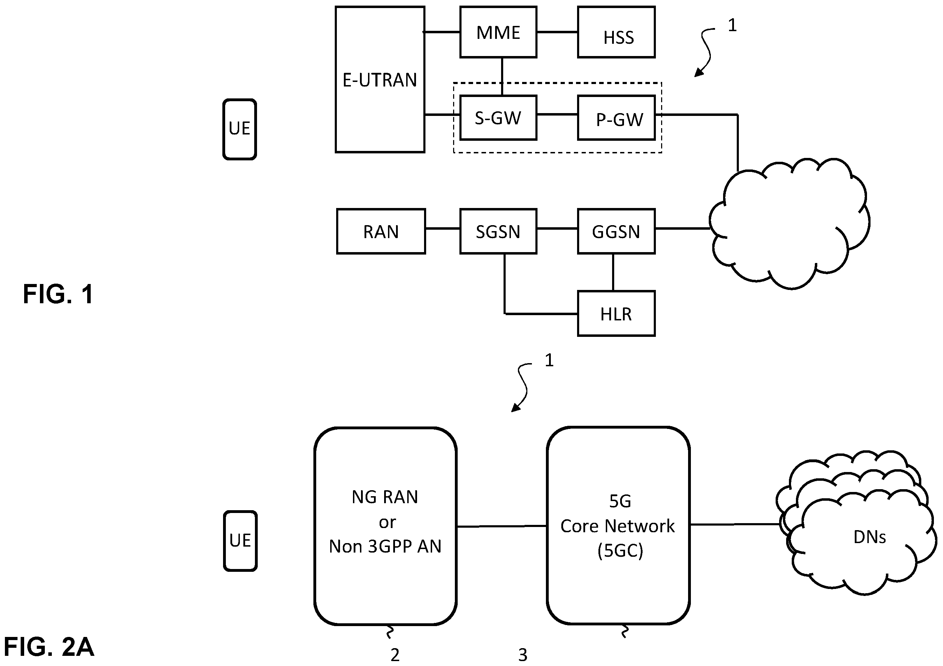

FIG. 1 is a schematic illustration of a prior art telecommunications network 1.

The lower branch of FIG. 1 represents a 3G or UMTS network comprising a Gateway GPRS Support Node (GGSN), a Serving GPRS Support Node (SGSN) and a Radio Access Network (RAN or UTRAN). For a GSM/EDGE radio access network (GERAN), the RAN comprises a Base Station Controller (BSC) connected to a plurality of Base (Transceiver) Stations (BSs, BTSs), both not shown. For a UMTS radio access network (UTRAN), the RAN comprises a Radio Network Controller (RNC) connected to a plurality of NodeBs), also not shown. The GGSN and the SGSN are conventionally connected to a Home Location Register (HLR) or Home Subscriber Server (HSS) that may contain subscription information for the User Equipment UE.

The upper branch in FIG. 1 represents 4G telecommunications network, commonly indicated as Long Term Evolution (LTE) or Evolved Packet System (EPS). Such a network comprises a PDN Gateway (P-GW) and a Serving Gateway (S-GW). The E-UTRAN of the EPS comprises evolved NodeBs (eNodeBs or eNBs) providing wireless access for a device 2 that is connected to the S-GW via a packet network. The S-GW is connected to a Home Subscriber Server HSS and a Mobility Management Entity MME for signalling purposes. The HSS includes a subscription of users of User Equipment UE. Further information of the general architecture of a EPS network can be found in 3GPP TS 23.401.

A UE may access the telecommunications network 1 by means of an attach request from the UE to the network involving the MME and HSS containing subscription information for the UE. During the LTE attach procedure, an authentication procedure is performed between the UE and the telecommunication system MME/HSS. In particular, the UE sends an Attach Request to the MME including the GUTI of the UE received in a previous attach or the IMSI. The MME performs authentication and security for the UE in cooperation with the HSS to authenticate the UE and to secure messages exchanged between the MME and UE over the radio interface. Further information is provided in 3GPP TS 24.301. Likewise, for the 3G/UMTS telecommunications network, the UE sends an attach request to the SGSN including a P-TMSI or IMSI and the SGSN performs authentication and security of the UE in cooperation with the HLR or HSS. Further information is provided in 3GPP TS 23.060.

FIG. 2A is a schematic illustration of a prior art 5G telecommunications network 1. The 5G network is composed of a 5G access network 2 and a 5G core network (5GC) 3. The access network is made up of a new-generation radio access network (NG-RAN) which uses the 5G new radio interface (NR). The NG-RAN comprises 5G base stations, referred to as gNB's (not shown) which are connected to the 5GC and to each other. The access network 2 may comprise a non-3GPP access network (e.g. WiFi, xDSL, etc) connecting to the 5GC. Access to the 5GC may also be hybrid. The different network entities are connected by an underlying IP (or other transport technology) transport network. The 5G network architecture is connected to a plurality of data networks DN. Data networks can be the internet, an operator specific network, a dedicated network, etc.

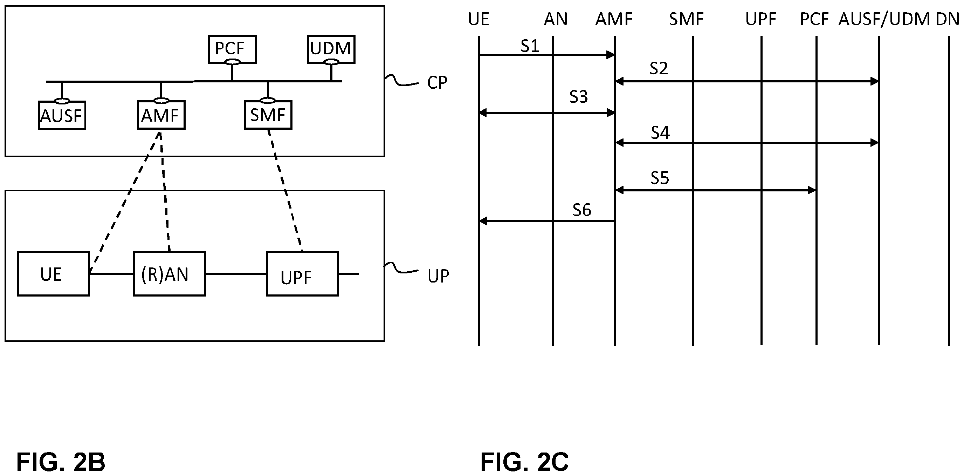

FIG. 2B shows a 5G telecommunications network in a service-based architecture in combination with a user device UE and access network (R)AN. The 5G core network 5GC comprises many systems that are defined in terms of network functions (NF) that provide services as sets of interactions between two or more network functions. The upper part of FIG. 2B shows a set of network functions that form the 5G control plane CP.

Amongst others, the control plane comprises an access and mobility management function (AMF) system that handles most signalling coming from and going to the UE, hereinafter also referred to as access and mobility system. The AMF also interacts with other functions in the control plane. The system performing the access and mobility function AMF has the responsibility of access control and registration of the UE in the 5GC. Such tasks are typically performed prior to allowing the UE to establish a protocol data unit, PDU, session with the 5GC.

The AMF does not handle session management but relays session-related messages to and from a system performing a session management function (SMF), hereinafter referred to as session management system. The session management system performs establishment, modification and release of PDU sessions. The control plane also comprises a system performing a policy control function (PCF) that provides policy rules (QoS, filtering, charging) to other control plane functions, such as the SMF.

Further functions that are comprised in the control plane CP include the unified data management function (UDM) and/or a unified data repository (UDR), also referred to as unified data management system herein, and the authentication server function (AUSF). The UDM is partly the equivalent of the home server system HSS in 3G and 4G networks as shown in FIG. 1 and is a frontend function to the UDR for UE-related information, such as credentials, identifiers, AMF details, and SMF PDU sessions. For security reasons, credentials are usually stored directly in the UDM, which is also called ARPF (Authentication credential Repository and Processing Function). For decryption of the Subscription Concealed Identity (SUCI) into the Subscription Permanent Identifier (SUPI), the UDM contains a decryption function called Subscription Identifier De-concealing Function (SIDF). UDR is a database that provides access to data offered as services to other network systems, such as the PCF system. The AUSF supports authentication for 3GPP and non-3GPP access.

For the user plane UP, the lower part in FIG. 2B, the UE communicates via the (radio) access network 2, indicated as (R)AN, with a system performing a user plane function (UPF). The main task of the UPF is to process and forward user data. The UPF is controlled by the SMF and connects with external data networks DN. The system performing the session management function SMF has the responsibility for setting up connectivity for the UE toward data networks as well as managing the user plane for that connectivity. To connect to a DN, the UE requests establishment of a protocol data unit (PDU) Session. The PDU is the basic end-user protocol type carried by the PDU session, e.g. IP packets or Ethernet frames. Each PDU session provides an association between the UE and a specific DN.

A UE needs to register with the telecommunications network to get authorized to receive services, to enable mobility tracking and to enable reachability as set out in 3GPP TS 23.502. A few steps of the registration procedure are shown in FIG. 2C.

In step S1, a UE sends a network access request, also referred to as NAS Registration request message to the 5G access network which selects an access and mobility system AMF, if no AMF selection is made in the network access request. The network access request contains, amongst others, a registration type (e.g. initial registration, mobility registration update, or periodic registration update) and a UE identity (e.g. a 5G-GUTI, or SUPI or SUCI). If not yet available, the AMF system may request the SUPI/SUCI from the UE via a NAS message exchange (not shown).

In step S2, the AMF requests UE authentication from a telecommunications system comprising the Authentication Server system AUSF that interacts with the UDM system and receives the authentication information and SUPI at the AMF. In step S3 authentication is arranged with the UE.

In step S4, the AMF interacts with the UDM to register with the UDM and obtain subscription data, including access and mobility subscription data, SMF selection subscription data to create a UE context for the UE in the AMF.

In step S5, a policy and charging system PCF is selected and the AMF interacts with the PCF to create an AM policy association and retrieve a UE policy and access and mobility control policy, wherein the PCF responds with the policy association information.

In step S6, a NAS Registration Accept message, a registration accept message, is sent to the UE.

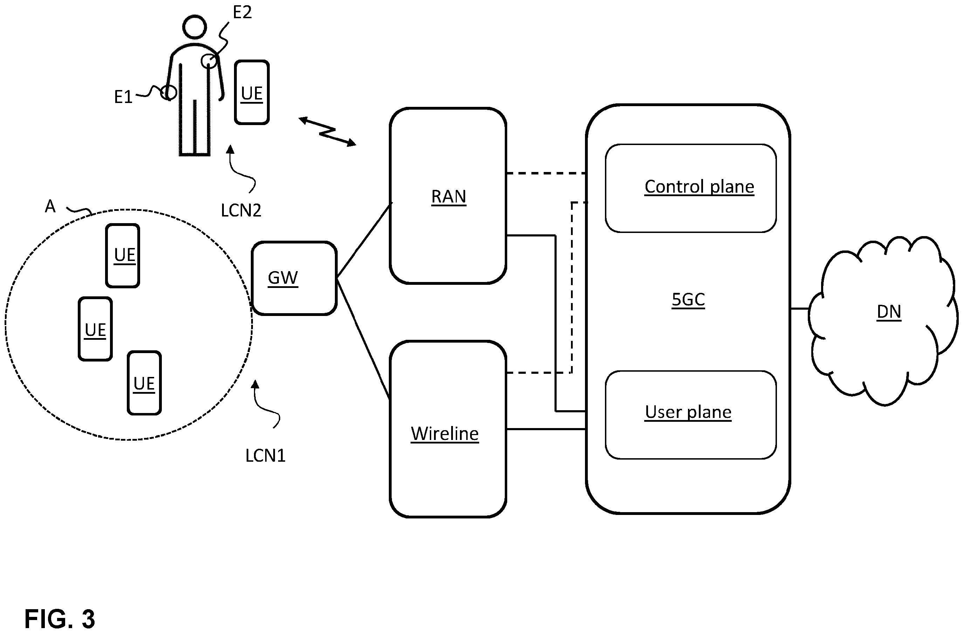

FIG. 3 is a schematic illustration of a local customer network LCN, such as a customer premises network CPN or personal loT network PIN configured for communication with a 5G telecommunications network as described above with reference to FIGS. 2A-2C. It should be appreciated that similar local customer networks may be configured for communication with a 3G or 4G telecommunications network.

Local customer network LCN1 is a customer premises network CPN that comprises a gateway device GW such as a 5G-RG (5G residential gateway) or an eRG (enhanced residential gateway). The gateway device GW provides wireless coverage (possibly via a premises radio access network, PRAN, not shown) in a coverage area A for a plurality of UEs connected to a 5GC via either a wireline access network or a wireless access network RAN. The gateway device GW may connect to the 5GC as a UE in a manner corresponding to FIG. 1C interacting with functions in the control plane and user plane and forwards traffic to and from the UEs in the local network LCN1 via an established PDU session. The GW may assign addresses, e.g. IP addresses, to UEs in the local network LCN1. In this manner, the UEs behind the gateway device GW can make use of a single PDU session of the GW for a data network DN without being registered in the 5GC and using the IP address assigned by the telecommunications network to the gateway device GW. When the UE is associated with/connected to the gateway device GW, using Ethernet, Zigbee, WiFi or Bluetooth, for example, all types of traffic may be routed via the PDU Session of the gateway device GW towards the data network DN via a 5G-RAN or via wireline access and the 5GC.

FIG. 3 also illustrates a second local customer network LCN2, a personal loT network PIN, comprising a PIN element with a gateway support function, here a UE (e.g. a mobile smartphone), in communication with various wearable PIN elements E1 (e.g. a smartwatch) and E2 (e.g. a sensor contained in the clothes of the person). Like for LCN1, the UE in LCN2 may have an established PDU session with the 5GC over the radio access network RAN in FIG. 3, so that the PIN elements E1, E2 may communicate with the 5GC via the UE. It should be appreciated that further local customer networks may be used, such as a PIN network with fixed and mobile PIN elements, such as a household network.

In the above examples, the gateway device GW providing LCN1 and the UE functioning as a gateway device providing LCN2 have a subscription to access the 5GC. In one embodiment, this subscription comprises a gateway device identifier (e.g. a SUPI/SUCI) for the gateway device GW and at least one gateway device credential (e.g. a long-term key) for the gateway device GW stored in both the gateway device GW and in the UDM of the 5GC network. In this manner, the gateway device GW can register in the 5GC as shown in FIG. 2C and establish a PDU session that can be used by the UE's in coverage area A. Similarly, the PIN elements E1, E2 can be make use of the established PDU session of the UE when connected via LCN2.

Since the electronic devices (the UEs in LCN1 and the PIN elements E1, E2 in LCN2) are without an individual subscription to access the 5GC, these electronic devices cannot communicate through the 5G telecommunications network when there is no connection to these local networks, for example when a UE leaves the coverage area A of gateway device GW of LCN1 or the gateway device UE of LCN2 does not function properly or a PIN element cannot communication with this UE.

The present disclosure contains a solution to enable authentication of such electronic devices not able to access the 5GC via the gateway device GW. In summary, an electronic device obtains derived subscription parameters which are derived from original subscription parameters of the gateway device or another device with original subscription parameters and use these parameters to access the telecommunications network and participate in an authentication procedure.

In particular, an electronic device may obtain derived subscription parameters, possibly temporarily, from an authentication support system that may obtain original subscription parameters, for example of the gateway device or another device, by sending a request for the derived subscription parameters using an electronic device identifier. The receipt of the electronic device identifier from the electronic device may be interpreted by the authentication support system as the request for the derived subscription parameters. By using derived subscription parameters, for example, a derived device identifier and at least one derived device credential and involving the electronic device identifier in the function to obtain the derived subscription parameters, these parameters can be made specific for the electronic device. The derived subscription parameters may be provided to the electronic device to facilitate access to and authentication in the second network.

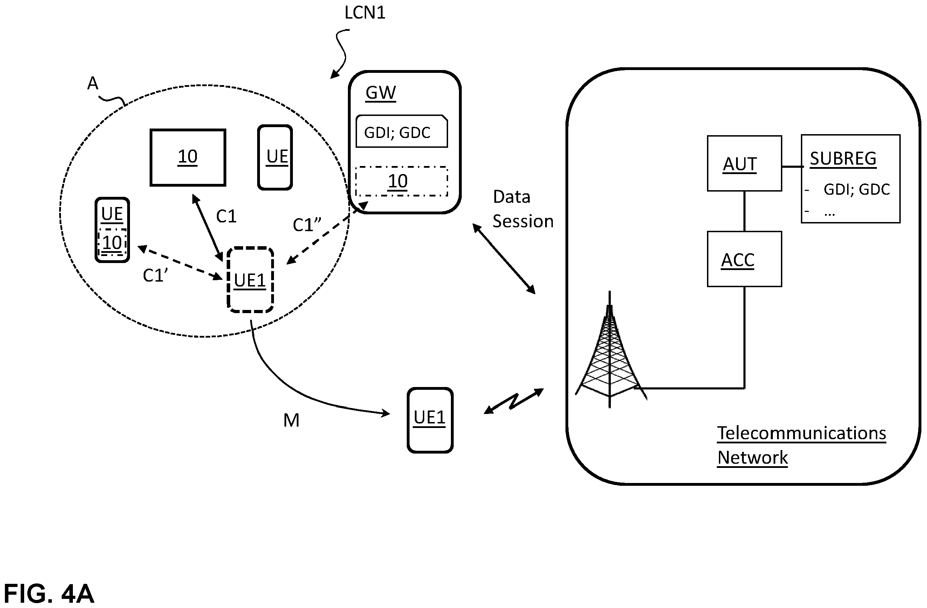

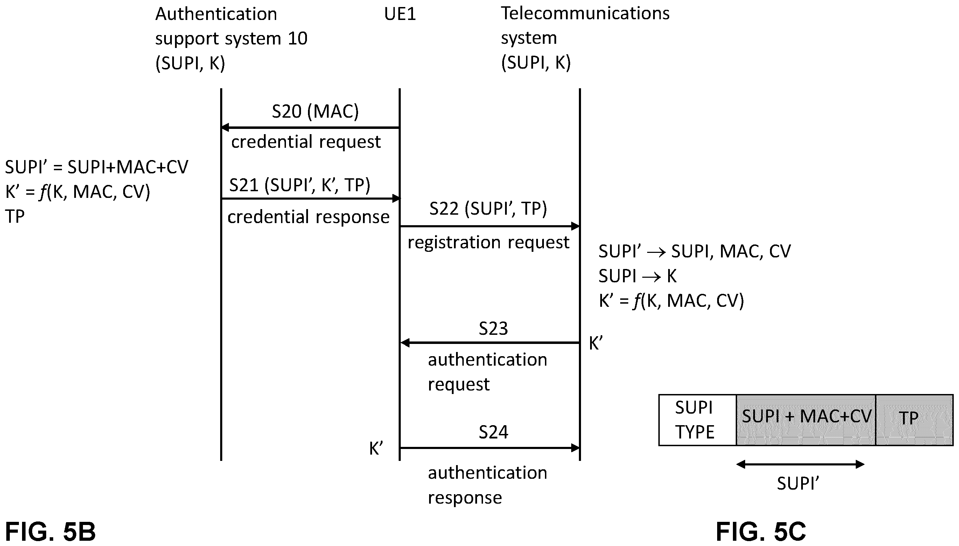

An embodiment for enabling authentication of an electronic device without a subscription to access the telecommunications network is depicted in FIGS. 4A and 5B.

The embodiment implements an authentication support system 10 to enable access by the electronic device UE1 to the telecommunications network without a subscription for accessing this network. The authentication support system 10 may be arranged in a separate device as shown by the solid rectangle or may be integrated in another device, such as the gateway device GW, shown by the dashed rectangle or in another electronic device, such as a UE, also shown by the dashed rectangle.

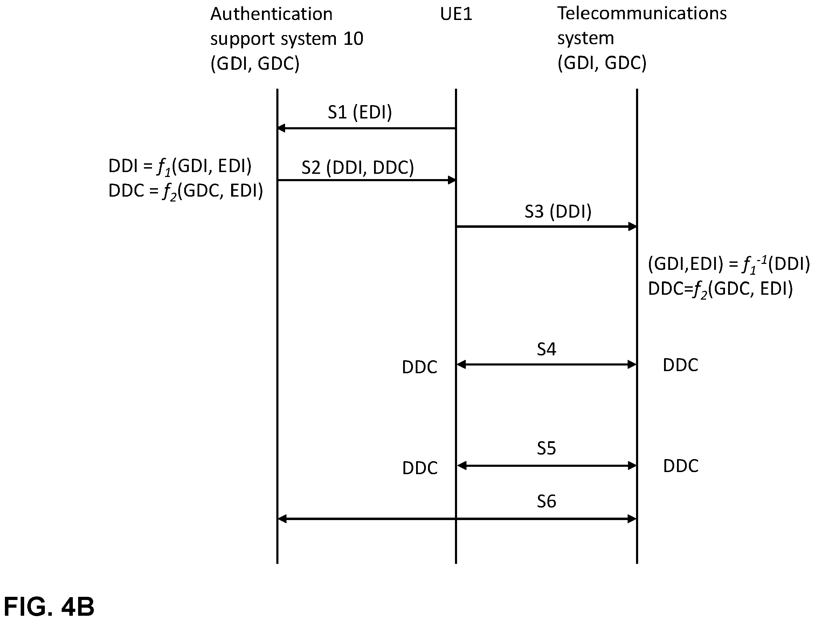

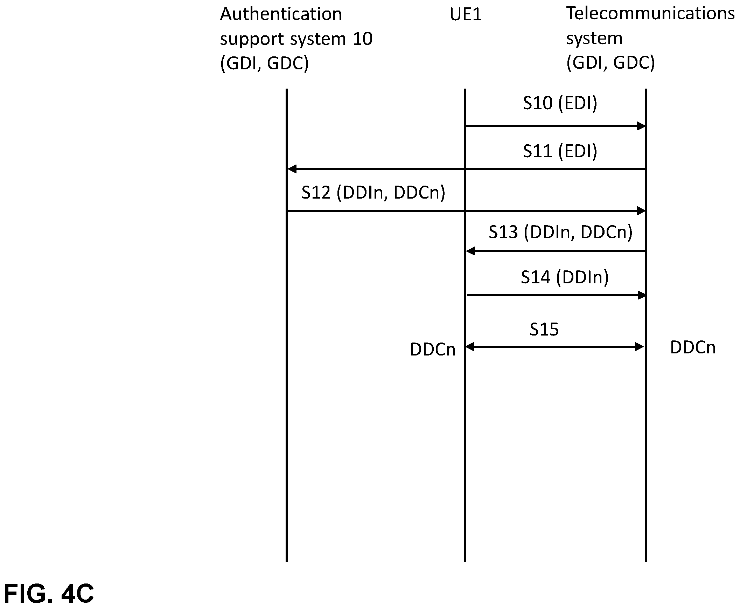

The electronic device UE1 is configured to communicate over a first network with the authentication support system 10. The electronic device UE1 has no subscription to access the telecommunications network and the gateway device GW has a subscription stored the telecommunications network, viz in subscriber register SUBREG. The subscription in the telecommunications network includes a gateway device identifier GDI and at least one associated gateway device credential GDC stored in the subscriber register SUBREG. The authentication support system 10 can obtain the gateway device identifier GDI and the associated gateway device credential GDC of the gateway device. The gateway device identifier GDI and associated gateway device credential GDC may, e.g. be stored in a Universal Integrated Circuit Card (UICC) of the gateway device GW as schematically shown in FIG. 4. The gateway device identifier GDI may be in the form of a SUPI/SUCI or IMSI. The associated gateway device credential GDC has the form of a long-term key. GDC may be the long-term key itself or be a key derived from the long-term key (e.g. one of the existing derived keys, such as K_{AUSF}, K_{SEAF}, K_{AMF}, or K_{AKMA} or a newly defined derived key using e.g. a Key Derivation Function (KDF) as defined in 3GPP TS 33.102, TS 33.401, or TS 33.501). The same subscription parameters are also stored in the telecommunications network, here in subscriber register SUBREG.

The electronic device UE1 is configured to provide an electronic device identifier EDI over a first network to the authentication support system 10. The first network may be the local network LCN1 provided by the gateway device 5G-RG. The first network may also be a dedicated connection between UE1 and the authentication support system 10, such as a Bluetooth connection, a cable connection, a Zigbee connection, a temporary wireless connection etc. The electronic device identifier EDI may be a local network identifier, such as a MAC address of the electronic device UE1.

The authentication support system 10 is configured to determine a derived device identifier DDI and a derived device credential DDC, each based on at least the gateway device identifier GDI and the electronic device identifier EDI. The derived device identifier DDI may be a, possibly reversible, function *f*₁ of the gateway device identifier GDI and the electronic device identifier EDI. In one embodiment, the derived device identifier DDI includes the electronic device identifier EDI and, possibly, the gateway device identifier GDI. For example, the derived device identifier DDI may be a combination of the gateway device identifier GDI and the electronic device identifier EDI, for example, DDI = GDI + EDI. The function "+" in this application meaning the concatenation of GDI and EDI. e.g. if GDI is "12345" and EDI is "ABCDE" then DDI = "12345ABCDE".

In one embodiment, the derived device credential DDC is a function *f*₂ of the gateway device credential GDC of the original subscription and the electronic device identifier EDI, i.e. DDC= *f*₂ (GDI, EDI). Function *f*₂ may be a one-way function to make derivation of the gateway device credential GDC from the derived device credential DDC virtually impossible. The authentication support system 10 may obtain the gateway device identifier GDI and the gateway device credential GDC from the gateway device GW. The authentication support system 10 is also configured to return the derived device identifier DDI and the derived device credential DDC to the electronic device UE1 from which the electronic device identifier EDI was received, possibly in a secured manner.

The electronic device UE1 is configured to receive the derived device identifier DDI and the derived device credential DDC from the authentication support system 10. Two-way communications between the electronic device UE1 and the authentication support system 10 for authentication support are shown by arrow C1 in FIG. 4. Likewise, if authentication support is provided by another device UE than the separate authentication support system 10, for example authentication support system 10 in the UE, arrow C1' indicates the communication. For authentication support by an authentication support system 10 integrated in the gateway device GW, arrow C1" indicates communication between the UE1 and the authentication support system 10.

The electronic device UE1 stores the derived device identifier DDI and derived device credential DDC at least temporarily. When the electronic device UE1 moves out of the coverage area A of the gateway device GW (arrow M), UE1 would, in the absence of a dedicated subscription to access the telecommunications network, be unable to access the telecommunications network using access entity ACC and conduct an authentication procedure with the telecommunications system. However, the electronic device UE1 may use the derived device identifier DDI and derived device credential DDC for this purpose. In this manner, the gateway device GW may continue to use the established data session for communications of other electronic devices UE in LCN1.

In an embodiment, the electronic device UE1 is configured to include the derived device identifier DDI in a network access request and transmit the network access request including the derived device identifier to the telecommunications network comprising an access entity ACC. The network access request may be an attach request for a 3G or 4G telecommunications network or a registration request for a 5G telecommunications network. In one embodiment, the derived device identifier DDI includes the electronic device identifier EDI and, possibly the gateway device identifier GDI. For example, the derived device identifier DDI may be a combination of the gateway device identifier GWI and the electronic device identifier EDI, for example, DDI = GWI + EDI.

The derived device credential DDC is temporarily stored in the electronic device UE1 to enable the electronic device UE1 to participate in an authentication procedure with the telecommunication system, comprising authentication entity AUT and subscription register SUBREG, when outside the coverage area A.

The telecommunication system is configured to determine the gateway device credential GDC using at least the derived device identifier DDI and the gateway device identifier GDI. In one embodiment, the telecommunication system is configured to obtain the gateway device identifier GDI based on the derived device identifier DDI recognized in the network access request and subsequently obtain the gateway device credential GDC based on the obtained gateway device identifier GDI from the subscription register SUBREG of the telecommunication system. The telecommunication system is also configured to obtain a derived device credential DDC for the electronic device UE1 based on at least the gateway device credential GDC and the electronic device identifier EDI obtained from the derived device identifier DDI. In one embodiment, the derived device credential DDC is a function of the gateway device credential GDC of the original subscription of the gateway device GW and the electronic device identifier EDI, i.e. DDC= *f*₂ (GDI, EDI). Function *f*₂ may be a one-way function as explained above.

The telecommunication system comprising, for example, entities AUT and SUBREG (which may be collocated) is configured to participate in an authentication procedure with the electronic device UE1 over the telecommunications network after receiving the network access request and to use the derived device credential DDC in the authentication procedure with the electronic device UE1. Likewise, the electronic device UE1 is configured to participate in the authentication procedure with the telecommunication system over the telecommunications network in response to the network access request and to use the derived device credential received in the authentication procedure with the telecommunications system comprising AUT and SUBREG. The authentication procedure between electronic device UE1 and the telecommunication system can be the standard authentication procedure using the derived device credential DDC instead of the standard credential (such as the long-term key).

FIG. 4B is a schematic illustration of some steps of a method to authenticate UE1 in the telecommunications network without having a subscription in this network.

Step S1 involves the electronic device UE1 to send a request for authentication support to authentication support system 10. The request contains at least the electronic device identifier EDI. It is assumed that authentication support system 10 has already obtained original subscription parameters that are also stored in the telecommunications network, for example of gateway device GW or of user device UE. These original subscription parameters are referred to, in this example, as gateway device identifier GDI and at least one associated gateway device credential GDC. GDI and GDC may be obtained by the authentication support system 10 from the gateway device GW in a secure manner.

It is assumed that the electronic user device UE1 has been admitted obtaining authentication support from the authentication support system 10. One option includes pairing the electronic device UE1 and the authentication support system 10 when in close vicinity to each other (e.g. by pushing a button on one or both sides). Alternatively, a filter may be established in the authentication support system 10 only permitting transmission of the derived subscription parameters for particular electronic device identifiers EDI (such as MAC addresses). Another alternative includes configuring a portal for the authentication support system 10 on which an association between the authentication support system 10 or gateway device GW and at least one electronic device UE1 can be set. Yet another option may be that the user or owner of the authentication support system 10 or gateway device GW (or other subscribed device UE of which the subscription credentials are used) receives a message, e.g. in the portal, or on the user's device (e.g. a mobile phone), requesting the user explicitly to allow or deny the electronic device UE1 to obtain authentication support.

Upon receipt of the transmission from UE1 over LCN1 (or another link) containing the electronic device identifier EDI, the authentication support system 10 derives derived device identifier DDI and at least one derived device credential DDC. Both derived parameters are a function of the electronic device identifier EDI, whereas the derived device identifier DDI is also a function of the gateway device identifier GDI and the derived device credential DDC is also a function of the gate device credential GDC. For example, DDI=GDI+EDI, whereas DDC is a one-way function f of electronic device identifier EDI and the gateway device credential GDC.

In the previous paragraph, it was assumed that the authentication support function included generating the derived device identifier DDI and the derived device credential DDC upon receiving the request from the electronic device UE1. In another embodiment, at least one of the derived device identifier DDI and the derived device credential DDC may be pre-stored by the authentication support system 10, which is feasible, for example, in case the electronic device identifier EDI is already known to the authentication support function, for example by manual configuration by a user, or previous detection of the electronic device identifier EDI in the first network. Such pre-storage is beneficial for saving processing power, e.g. if the UE in LCN2 of FIG. 3 supports authentication of a PIN element E1. The encrypted derived device identities may be calculated in batch before any actual communication between electronic device and telecommunication network has occurred.

The derived subscription parameters DDI, DDC are returned to the electronic device UE1 in step S2.

The electronic device UE1 may store at least one of the received derived parameters, at least temporarily.

In step S3, the electronic device UE1 includes the derived device identifier DDI in a network access request to the second network comprising the telecommunications system. The telecommunication system, storing GDI and GDC in the subscriber register SUBREG, recognizes the derived device identifier DDI in the network access request. This may be achieved by a flag in the network access request indicating that the network access request contains a derived device identifier DDI, by the format of the DDI or by a type identifier, for example. Upon recognition of the special network access request, the telecommunications system attempts to obtain the gateway device identifier GDI from the contents of the network access request, such as from the derived device identifier DDI. From the gateway device identifier GDI, the telecommunications system determines the gateway device credential GDC and from the gateway device credential GDC, the derived device credential DDC can be calculated using the same function, preferably one-way function, that was applied by the authentication support system 10.

Since both the electronic device UE1 and the telecommunications system are now in the possession of the derived device credential DDC, an authentication procedure can be performed as shown in step S4, in particular between electronic device UE1 and entity AUT of the telecommunication system. The authentication procedure may involve transmitting an authentication challenge from the telecommunication system to the electronic device UE1 based on derived device credential DDC obtained in the telecommunications system and an authentication response sent in return by the electronic device UE1 to the telecommunication system also based on the derived device credential obtained by the electronic device UE1. When both the challenge and response are based on the same derived device credentials DDC, the authentication is successful, and the access procedure may be continued. The telecommunications system may use the derived device credential DDC to obtain an authentication vector for the electronic device UE1 and provide further entities in the telecommunications network with the appropriate information, such as encryption keys, based on derived device credential DDC in a manner known as such to the skilled person.

The electronic device UE1, authentication support system 10 and telecommunication system facilitate authentication of the electronic device to access the telecommunications network without a need for the electronic device UE to have a subscription (an identifier and credential(s)) to access this network. This enables the electronic device UE1 to function independently of the gateway device GW. The gateway device GW may continue to act as a gateway for devices in the coverage area A of the local network LCN1.

Step S5 indicates a re-authentication procedure which may need to be performed after some time. If the telecommunication system has discarded derived device credential DDC from a previous authentication (to save storage resources, for example), the telecommunication system may need to re-calculate the derived device credential DDC based on, for example, the derived device identifier DDI still available to the telecommunication system. If the derived device credential DDC is still available, this credential can be used again for the re-authentication.

Step S6 indicates a procedure for verifying the validity of derived device identifier DDI and/or the derived device credential DDC using, for example, a validity parameter indicating the validity of the DDI and/or DDC. One example of such a validity parameter is a validity time parameter indicating an expiry time of the DDI and/or DDC. In step S6, the telecommunication determines a validity time of the DDI and/or DDC by sending a request to the authentication support system 10 and receive the information accordingly. The embodiment allows transmission of the validity parameter over a separate, possibly secure, channel independent from the electronic device UE1. In one embodiment, the validity time parameter may also comprise a derivation time indicating when the DDI and/or DCI were derived. The telecommunication system may apply a policy prescribing how long ago DDI and/or DDC may have been derived for successful use in the authentication procedure. If the telecommunication system determines that the derived device identifier DDI and/or the derived device credential DDC are not valid or are no longer valid, the telecommunication system may stop the access to the telecommunications network and/or refuse re-access to the telecommunications network using that derived device identifier DDI and/or derived device credential DDC.

FIG. 4C shows as exemplary procedure for the electronic device to refresh the derived device identifier DDI and the derived device credential DDC. In one embodiment, for such a refresh, the electronic device UE1 does not need to return to the coverage area A of local network LCN1. As shown in FIG. 4C, the electronic device UE1 may use the telecommunications network to obtain a new set of derived subscription parameters DDIn and DDCn. This procedure may be performed either before expiry of the validity of the old derived subscription parameters DDI and DDC or (shortly) after expiry of the validity of the old derived subscription parameters DDI and DDC provided that access to the telecommunications network is maintained for some time (e.g. until re-authentication is required).

In FIG. 4C, step S10 illustrates an request from electronic device UE1 including the electronic device identifier EDI. The telecommunication system forwards, step S11, the electronic device identifier EDI to the authentication support system that derives the new derived subscription parameters DDIn and DDCn in the same manner as described above. These new derived subscription parameters DDIn and DDCn are transmitted to UE1 via the telecommunication system in steps S12 and step S13. This enables UE1 to access the telecommunications network again via a network access request S14 now containing new derived device identifier DDIn. A new authentication procedure, now based on derived device credential DDCn, can be performed in step S15.

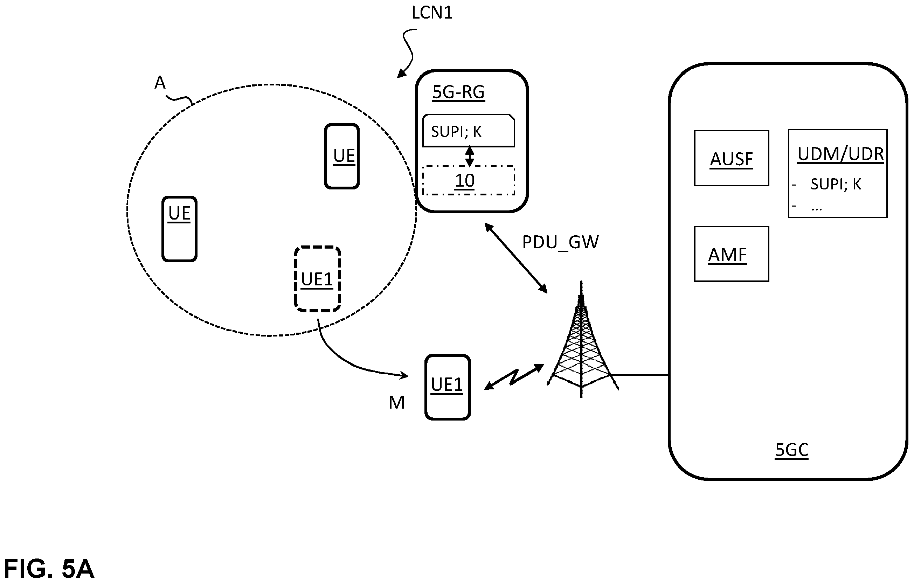

In one embodiment, the possibilities of having new derived subscription parameters are enhanced by using an additional changeable value for at least one of these derived subscription parameters. For example, the derived device identifier DDI may be based on at least the gateway device identifier GDI, the electronic device identifier EDI and the additional changeable value CV and the derived device credential DDC may be based on at least the gateway device credential GDC, the electronic device identifier EDI and the additional changeable value CV. For example, the derived device identifier may be a combination of the gateway device identifier GDI, the electronic device identifier EDI and the selected additional value CV, for example DDI=GDI+EDI+CV. The additional, changeable, value may comprise a random value. The authentication support system 10 may be configured to store or generate the additional changeable value CV and use this value for deriving the derived device identifier DDI and the derived device credential DDC. The additional value may be changed each time a request is received from an electronic device for a derived device identifier DDI and/or a derived device credential DDC, e.g. by receiving an electronic device identifier EDI from the electronic device. Likewise, the telecommunication system may be configured to process the additional value CV from the derived device identifier DDI received from the electronic device UE1 over the telecommunications network to finally obtain the derived device credential DDC for the authentication procedure. Using the additional value CV for the derived device identifier DDI and derived device credential DDC facilitates changing the derived device identifier DDI and derived device credential DDC to enhance security, which may be advisable in the absence of a security module for storing the derived subscription parameters in the electronic device UE1. An example of using a changeable value will be described with reference to FIGS. 5A and 5B.

FIGS. 5A and 5B provides a schematic illustration of an electronic device, an authentication support system and a telecommunications system in a 5G telecommunications network and a process chart illustrating steps of a method to enable authentication of an electronic device for accessing the 5G telecommunications network without having a subscription for such access. The 5G telecommunications network was introduced in FIGS. 2A-2C. The 5G telecommunications network includes a 5G core network 5GC comprising entities the AMF controlling registration of devices, the AUSF controlling authentication via the AMF and the UDM/UDR storing subscription parameters, e.g subscription parameters of the 5G-RG, SUPI and long-term key K.

In FIG. 5A, it is assumed that the authentication support system 10 is integrated within the residential gateway device 5G-RG. The 5G-RG has a gateway device identifier GDI in the form of a SUPI and a gateway device credential in the form of a long-term key K. The derived device identifier DDI is constituted as SUPI - SUPI + EDI + CV, wherein EDI is the electronic device identifier of electronic device UE1, e.g. the MAC address. The derived device credential DDC, here key K', is derived from the gateway device credential K by the one-way function K' = *f* (K, EDI, CV), so that K cannot be calculated from K'. The addition of the changeable value facilitates generating different DDI's for the same electronic device UE1 but is optional. The authentication support system 10 can obtain SUPI' and K' by obtaining SUPI and K from the 5G-RG as indicated by the double arrow in FIG. 5A. The 5G-RG is connected to the 5GC via PDU-GW to enable data transfer for UE's within the coverage area A.

Some steps of the information flow for the system of FIG. 5A are explained with reference to FIG. 5B.

In step S20, the electronic device UE1 sends a credential request containing the electronic device identifier EDI, here the MAC address, to the authentication support system 10 in the gateway device 5G-RG. After reception, the authentication support system 10 may generate or retrieve a value, e.g. a random value CV.

In step S21, the authentication support system 10 sends a 'credential response (SUPI', K', TP) to the electronic device UE1, wherein TP is a time parameter. The time parameter may indicate a validity time for the derived subscription parameters SUPI', K' or a derivation time indicating the time of derivation of these parameters. The time parameter TP can be used by the telecommunication system to verify the validity time or decide on the validity time of the derived subscription parameters SUPI', K'.

As noted with reference to FIGS. 4A-4B, SUPI' and K' may also have been prestored at the authentication support system 10 instead of derived in response to the credential request of step S20.

The authentication support system 10 may store at least one of SUPI', K', TP in association with the MAC address (the EDI) of the electronic device UE1. This facilitates verification from the telecommunication system directly with the authentication support system 10 (e.g. using PDU_GW) in a separate procedure independent from electronic device UE1 as explained with reference to FIG. 4B. It should be appreciated that storage is optional.

In step S22, the electronic device UE1 transmits a registration request via the radio access network to the AMF of the telecommunications network. The registration request is schematically shown in FIG. 5C and contains at least SUPI' = SUPI + MAC +TP. SUPI' may be transmitted in encrypted form as shown by the grey area in FIG. 5C. Encryption may be obtained by applying SUCI encryption. The AMF or AUSF entity of the 5GC may recognize the special type of registration request by means of the type field as shown in FIG. 5C. Alternatively, the registration request may contain a flag to this effect, or the telecommunication system may recognize a specific format in case SUPI' is not encrypted. Encryption may also be applied only for the time parameter TP. Protected time parameter TP may also be integrity protected against modification. Integrity protection of time parameter TP can be based on a matching pair of keys (private key in UE1 and public key in 5GC or shared symmetric key), or it can be included in the encrypted SUPI' as shown in FIG. 5C.

The telecommunication system comprising entities AUSF and UDM/UDR proceed as follows on receipt of the registration request of step S22.

With the registration request, the telecommunication system receives SUPI' and determines, for example based on the type field as shown in FIG. 5C, that the SUPI in the registration request contains a derived SUPI, i.e. SUPI'. The telecommunication system also receives the time parameter TP. The telecommunication system may decrypt SUPI' and/or TP when these were received in encrypted form.

The telecommunication system may then extract SUPI, MAC and CV from the received SUPI' in the registration request and subsequently retrieve K from the UDM/UDR of the telecommunication system. The availability of credential K enables the telecommunication system to derive the derived device credential using the one-way function f by calculating K' = K' = *f* (K, MAC, CV). The telecommunication system may verify from the time parameter TP whether SUPI' and/or K' are valid. In one embodiment, the telecommunication system may verify from the time parameter TP whether or not K' is expired. In one embodiment, the time parameter comprises a derivation time of derivation of at least one of the derived device identifier and the derived device credential. The telecommunication system may use the derivation time to decide whether it can consider the derived device identifier SUPI' as valid, for example by implementing a policy for the time difference between the derivation time and the time of receipt of the network access request. Such a time parameter may be beneficial for pre-stored derived subscription parameter(s).

Now, both UE1 and the telecommunication system possess K', an authentication procedure can be performed. In one embodiment, the telecommunication system, e.g. entity AUSF, may initiate standard authentication by sending an authentication request to electronic device UE1. The authentication request comprises known contents, such as (AUTN, RAND, other parameters (e.g., K_{ASME}, or ngKSI, etc.)) but is based on derived device credential K'. This is shown in step S23.

The electronic device verifies the received authentication request and, if approved, responds with an authentication response in step S24. The content of the response is based again on K'. If the telecommunication system approves the authentication response, access to the telecommunications network may continue.

If time parameter TP is stored in the authentication support system 10, including the time parameter TP in the credential response of step S21 or in the registration request of step S22 may be omitted. Instead of adding a (protected) time parameter TP in the initial registration request, the time parameter TP check might also be performed by using an additional communication step, for example between the registration request in step S23 and the authentication of steps S23 and S24, between the telecommunication system and the authentication support system 10. For this, use can be made of an (possibly already existing) secure connection between the telecommunication system and the authentication support system 10.

It should be appreciated that the electronic device UE1 of FIG. 5A may perform re-authentication and/or refresh the derived subscription parameters in a similar manner as described with reference to FIGS. 4A-4C.

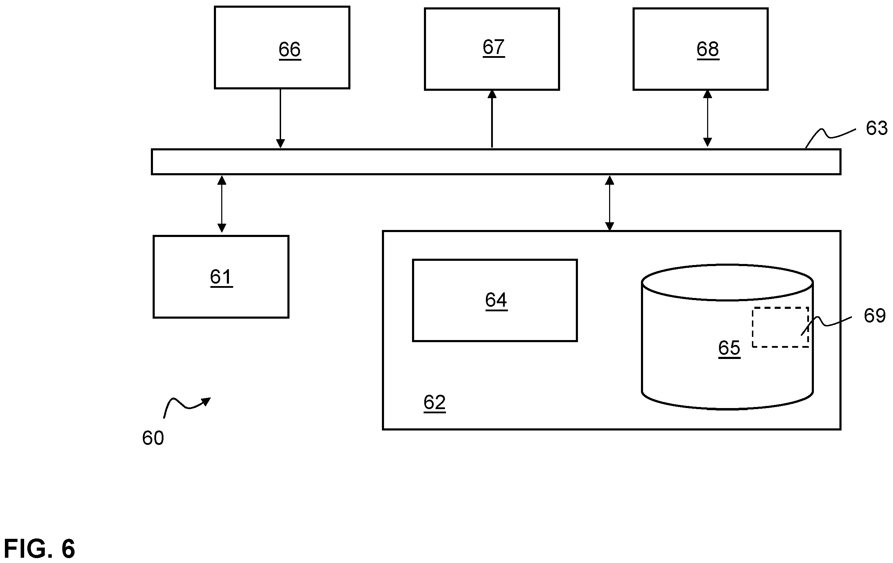

FIG. 6 depicts a block diagram illustrating an exemplary processing system according to a disclosed embodiment, e.g. an electronic device, an authentication support system or a telecommunication system as disclosed herein. As shown in FIG. 6, the processing system 60 may include at least one processor 61 coupled to memory elements 62 through a system bus 63. As such, the processing system may store program code within memory elements 62. Further, the processor 61 may execute the program code accessed from the memory elements 62 via a system bus 63. In one aspect, the processing system may be implemented as a computer system that is suitable for storing and/or executing program code. It should be appreciated, however, that the processing system 60 may be implemented in the form of any system including a processor and a memory that is capable of performing the functions described within this specification.

The memory elements 62 may include one or more physical memory devices such as, for example, local memory 64 and one or more bulk storage devices 65. The local memory may refer to random access memory or other non-persistent memory device(s) generally used during actual execution of the program code. A bulk storage device may be implemented as a hard drive or other persistent data storage device. The processing system 60 may also include one or more cache memories (not shown) that provide temporary storage of at least some program code in order to reduce the number of times program code must be retrieved from the bulk storage device 65 during execution.

Input/output (I/O) devices depicted as an input device 66 and an output device 67 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device (illustrated in FIG. 6 with a dashed line surrounding the input device 66 and the output device 67). An example of such a combined device is a touch sensitive display, also sometimes referred to as a "touch screen display" or simply "touch screen" that may be provided with the UE. In such an embodiment, input to the device may be provided by a movement of a physical object, such as e.g. a stylus or a finger of a person, on or near the touch screen display.

A network adapter 68 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 60, and a data transmitter for transmitting data from the processing system 60 to said systems, devices and/or networks. Modems, cable modems, and Ethernet cards are examples of different types of network adapter that may be used with the processing system 60.

As pictured in FIG. 6, the memory elements 62 may store an application 69. In various embodiments, the application 69 may be stored in the local memory 64, the one or more bulk storage devices 65, or apart from the local memory and the bulk storage devices. It should be appreciated that the processing system 60 may further execute an operating system (not shown in FIG. 6) that can facilitate execution of the application 69. The application 69, being implemented in the form of executable program code, can be executed by the processing system 60, e.g., by the processor 61. Responsive to executing the application, the processing system 60 may be configured to perform one or more operations or method steps described herein.

In one aspect of the present invention, one or more components of the electronic device, the authentication support system and/or the telecommunication system as disclosed herein may represent processing system 60 as described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 61 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The description of embodiments of the present invention has been presented for purposes of illustration but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

## Claims

1. An electronic device (UE1) configured to communicate over a first network (LC1) with an authentication support system (10) and over a second network with a telecommunication system via a gateway device (GW), wherein the electronic device has no subscription for access to the second network and the gateway device has a subscription to access the second network, the subscription including a gateway device identifier (GDI) and at least one associated gateway device credential (GDC) known in the telecommunication system, and wherein the gateway device identifier and the associated at least one gateway device credential are obtainable by the authentication support system,
wherein the electronic device is configured to:
- provide an electronic device identifier (EDI) over the first network to the authentication support system;
- receive over the first network, at least:
i) a derived device identifier (DDI) obtained from the authentication support system based on at least the gateway device identifier and the electronic device identifier;
ii) a derived device credential (DDC) obtained from the authentication support system based on at least the gateway device credential and the electronic device identifier;
- store the derived device identifier and derived device credential in the electronic device;
- include the derived device identifier received over the first network in a network access request;
- transmit the network access request including the derived device identifier over the second network to the telecommunication system;
- participate in an authentication procedure with the telecommunication system over the second network after transmitting the network access request and use the derived device credential in the authentication procedure with the telecommunication system.

2. An authentication support system (10) configured to communicate over a first network (LCN1) with an electronic device (UE1), wherein the electronic device is able to communicate with a telecommunication system over a second network via a gateway device (GW) and has no subscription for access to the second network, wherein the gateway device has a subscription for access to the second network, the subscription including a gateway device identifier (GDI) and at least one associated gateway device credential (GDC) known in the telecommunication system,
wherein the authentication support system is configured to:
- receive an electronic device identifier (EDI) from the electronic device over the first network;
- obtain the gateway device identifier and at least one associated gateway device credential of the gateway device,
- perform an authentication support function, for the electronic device to access the second network using a network access request, to obtain at least:
i) a derived device identifier (DDI) obtained by the authentication support function based on at least the gateway device identifier and the electronic device identifier;
ii) a derived device credential (DDC) obtained by the authentication support function based on at least the gateway device credential and the electronic device identifier;
- transmit the derived device identifier and the derived device credential over the first network to the electronic device.

3. A telecommunication system for a second network storing a subscription of a gateway device (GW), the subscription including a gateway device identifier (GDI) and at least one associated gateway device credential (GDC), wherein the telecommunication system is configured to:
- receive a network access request over the second network from an electronic device (UE1) not having a subscription for access to the second network;
- recognize a derived device identifier (DDI) in the network access request, wherein the derived device identifier is obtained based on at least the gateway device identifier and an electronic device identifier (EDI) in an authentication support system (10) communicating with the electronic device over a first network (LCN1);
- determine the gateway device credential using at least the derived device identifier and the gateway device identifier;
- obtain a derived device credential (DDC) for the electronic device based on at least the gateway device credential and the electronic device identifier;
- participate in an authentication procedure with the electronic device over the second network after receiving the network access request and use the derived device credential in the authentication procedure with the electronic device.

4. A system comprising at least two of the electronic device according to claim 1, the authentication support system according to claim 2 and the telecommunication system according to claim 3.

5. The electronic device according to claim 1 or the system according to one of the claims 2 to 4, wherein the derived device identifier is based on at least the gateway device identifier, the electronic device identifier and an additional changeable value and/or the derived device credential is based on at least the gateway device credential, the electronic device identifier and the additional changeable value.

6. The electronic device according to claim 1 or the system according to one of the claims 2 to 4, wherein a validity parameter is indicative of a validity of at least one of the derived device identifier and the derived device credential, wherein, optionally, at least one of the following applies for the validity parameter:
- the electronic device is configured to provide the validity parameter to the telecommunication system over the second network in protected form;
- the authentication support system is configured to transmit the validity parameter to the electronic device and the electronic device is configured to receive and process the validity parameter from the authentication support system;
- the electronic device is configured to include the validity parameter in the network access request to the second network and the telecommunication system is configured to receive and process the validity parameter;
- the electronic device and/or the authentication support system is configured to provide the validity parameter to the second network after transmission of the network access request from the electronic device;
- the telecommunication system is configured to refuse the network access request based on the validity parameter.

7. The electronic device according to claim 1 and claim 6 or the system according to one of the claims 2 to 4 and claim 6 wherein, the validity parameter is a validity time parameter indicative of a validity time of at least one of the derived device identifier and the derived device credential.

8. The electronic device according to claim 1 or the system according to one of the claims 2 to 4, wherein:
- the authentication support system is configured to at least partly encrypt the derived device identifier and/or derived device credential and, optionally, prestore the at least partly encrypted derived device identifier and/or derived device credential and to transmit the at least partly encrypted derived device identifier and/or the at least partly encrypted derived device credential over the first network to the electronic device;
- the electronic device is configured to receive the at least partly encrypted derived device credential and/or the at least partly encrypted derived device credential over the first network from the authentication support system and to include the at least partly encrypted derived device identifier in the network access request;
- the telecommunication system is configured to decrypt the at least partly encrypted derived device identifier in the network access request and process the decrypted derived device identifier.

9. The electronic device according to claim 1 or the authentication support system according to claim 2, wherein
- the electronic device is configured to provide the electronic device identifier to the authentication support system in a secure manner over the first network;
- the authentication support system is configured to receive the electronic device identifier from the electronic device in a secure manner over the first network.

10. The electronic device according to claim 1 or the authentication support system according to claim 2, wherein the first network is a local network and the electronic device identifier is a local network identifier, such as a MAC address, of the electronic device.

11. The electronic device according to claim 1 or the authentication support system according to claim 2, wherein
- the authentication support system is accommodated in the gateway device; or
- the authentication support system is configured to obtain the gateway device identifier and the at least one associated gateway device credential over the first network.

12. The electronic device according to claim 1 or the telecommunication system according to claim 3, wherein
- the electronic device is configured to construct the network access request to enable the telecommunication system to recognize the derived device identifier in the network access request;
- the telecommunication system is configured to recognize the derived device identifier in the received network access request.

13. The electronic device according to claim 1 or the telecommunication system according to claim 3, wherein
- the electronic device is configured to participate in a re-authentication procedure with the telecommunication system using the derived device credential;
- the telecommunication system is configured to participate in a re-authentication procedure with the electronic device using the derived device credential, and wherein, optionally, the telecommunication system is configured to re-calculate the derived device credential for the re-authentication procedure based on the received derived device identifier.

14. The electronic device according to claim 1 or the telecommunication system according to claim 3, wherein the second network is a 5G telecommunications network and wherein at least one of the following applies:
- the gateway device identifier is a Subscription Permanent Identifier, SUPI;
- the network access request is a registration request from the electronic device to a system running an Access and Mobility management Function, AMF, in the 5G telecommunications network;
- the derived device identifier has a SUPI format or a concealed SUPI format, SUCI, wherein, optionally, a SUPI format type field signals the presence of a derived device identifier.
- the derived device identifier is partially encrypted in a concealed SUPI format, SUCI.

15. The authentication support system according to claim 2 or the telecommunication system according to claim 3, wherein;
- the authentication support system is configured to store at least one of the derived device identifier, the derived device credential and a validity time parameter indicative of a validity time of at least one of the derived device identifier and the derived device credential, and wherein, the authentication support system is configured to provide at least one of the stored derived device identifier, the derived device credential and validity time parameter to the telecommunication system in a procedure separate from the authentication procedure;
- the telecommunication system is configured to obtain at least one of the stored derived device identifier, the derived device credential and a validity time parameter indicative of a validity time of at least one of the derived device identifier and the derived device credential from the authentication support system in a procedure separate from the authentication procedure.

16. The authentication support system according to claim 2 or the telecommunication system according to claim 3, wherein
- the authentication support system is configured to perform the authentication support function by executing a one-way function to obtain the derived device credential from at least the gateway device credential and the electronic device identifier;
- the telecommunication system is configured to execute a one-way function to obtain the derived device credential from at least the gateway device credential and the electronic device identifier.

## Patentansprüche

1. Elektronische Vorrichtung (UE1), die dazu ausgelegt ist, über ein erstes Netzwerk (LC1) mit einem Authentifizierungsunterstützungssystem (10) und über ein zweites Netzwerk mit einem Telekommunikationssystem über eine Gatewayvorrichtung (GW) zu kommunizieren, wobei die elektronische Vorrichtung keine Subskription für den Zugriff auf das zweite Netzwerk hat und die Gatewayvorrichtung eine Subskription für den Zugriff auf das zweite Netzwerk hat, wobei die Subskription einen Gatewayvorrichtungsidentifikator (GDI) und zumindest einen zugeordneten Gatewayvorrichtungs-Berechtigungsnachweis (GDC) beinhaltet, der in dem Telekommunikationssystem bekannt ist, und wobei der Gatewayvorrichtungsidentifikator und der zugeordnete zumindest eine Gatewayvorrichtungs-Berechtigungsnachweis durch das Authentifizierungsunterstützungssystem erhältlich sind,
wobei die elektronische Vorrichtung dazu ausgelegt ist:
- einen elektronischen Vorrichtungsidentifikator (EDI) über das erste Netzwerk an das Authentifizierungsunterstützungssystem bereitzustellen;
- über das erste Netzwerk zumindest:
i) einen abgeleiteten Vorrichtungsidentifikator (DDI), der von dem Authentifizierungsunterstützungssystem basierend auf zumindest dem Gatewayvorrichtungsidentifikator und dem elektronischen Vorrichtungsidentifikator erhalten wird;
ii) einen abgeleiteten Vorrichtungsberechtigungsnachweis (DDC), der von dem Authentifizierungsunterstützungssystem basierend auf zumindest dem Gatewayvorrichtungs-Berechtigungsnachweises und dem elektronischen Vorrichtungsidentifikator erhalten wird; zu empfangen
- den abgeleiteten Vorrichtungsidentifikator und den abgeleiteten Vorrichtungs-Berechtigungsnachweis in der elektronischen Vorrichtung zu speichern;
- den über das erste Netzwerk empfangenen abgeleiteten Vorrichtungsidentifikator in einer Netzwerkzugriffsanforderung zu beinhalten;
- die Netzwerkzugriffsanforderung einschließlich des abgeleiteten Vorrichtungsidentifikators über das zweite Netzwerk an das Telekommunikationssystem zu übertragen;
- nach dem Übertragen der Netzwerkzugriffsanforderung an einem Authentifizierungsvorgang mit dem Telekommunikationssystem über das zweite Netzwerk teilzunehmen und den abgeleiteten Vorrichtungs-Berechtigungsnachweis in dem Authentifizierungsvorgang mit dem Telekommunikationssystem zu verwenden.

2. Authentifizierungsunterstützungssystem (10), das dazu ausgelegt ist, über ein erstes Netzwerk (LCN1) mit einer elektronischen Vorrichtung (UE1) zu kommunizieren, wobei die elektronische Vorrichtung in der Lage ist, mit einem Telekommunikationssystem über ein zweites Netzwerk über eine Gatewayvorrichtung (GW) zu kommunizieren und keine Subskription für den Zugriff auf das zweite Netzwerk hat, wobei die Gatewayvorrichtung eine Subskription für den Zugriff auf das zweite Netzwerk hat, wobei die Subskription einen Gatewayvorrichtungsidentifikator (GDI) und zumindest einen zugeordneten Gatewayvorrichtungs-Berechtigungsnachweis (GDC) beinhaltet, der in dem Telekommunikationssystem bekannt ist,
wobei das Authentifizierungsunterstützungssystem dazu ausgelegt ist:
- einen elektronischen Vorrichtungsidentifikator (EDI) von der elektronischen Vorrichtung über das erste Netzwerk zu empfangen;
- den Gatewayvorrichtungsidentifikator und zumindest einen zugeordneten Gatewayvorrichtungs-Berechtigungsnachweis der Gatewayvorrichtung zu erhalten,
- eine Authentifizierungsunterstützungsfunktion für die elektronische Vorrichtung durchzuführen, auf das zweite Netzwerk unter Verwendung einer Netzwerkzugriffsanforderung zuzugreifen, um zumindest:
i) einen abgeleiteten Vorrichtungsidentifikator (DDI), der durch die Authentifizierungsunterstützungsfunktion basierend auf zumindest dem Gatewayvorrichtungsidentifikator und dem elektronischen Vorrichtungsidentifikator erhalten wird;
ii) einen abgeleiteten Vorrichtungs-Berechtigungsnachweises (DDC), der durch die Authentifizierungsunterstützungssystem basierend auf zumindest dem Gatewayvorrichtungs-Berechtigungsnachweises und dem elektronischen Vorrichtungsidentifikator erhalten wird; zu empfangen
- den abgeleiteten Vorrichtungsidentifikator und den abgeleiteten Vorrichtungs-Berechtigungsnachweis über das erste Netzwerk an die elektronische Vorrichtung zu übertragen.

3. Telekommunikationssystem für ein zweites Netzwerk, das eine Subskription einer Gatewayvorrichtung (GW) speichert, wobei die Subskription einen Gatewayvorrichtungsidentifikator (GDI) und zumindest einen zugeordneten Gatewayvorrichtungs-Berechtigungsnachweis (GDC) beinhaltet, wobei das Telekommunikationssystem dazu ausgelegt ist:
- eine Netzwerkzugriffsanforderung über das zweite Netzwerk von einer elektronischen Vorrichtung (UE1) zu empfangen, die keine Subskription für den Zugriff auf das zweite Netzwerk hat;
- einen abgeleiteten Vorrichtungsidentifikator (DDI) in der Netzwerkzugriffsanforderung zu erkennen, wobei der abgeleitete Vorrichtungsidentifikator basierend auf zumindest dem Gatewayvorrichtungsidentifikator und einem elektronischen Vorrichtungsidentifikator (EDI) in einem Authentifizierungsunterstützungssystem (10) erhalten wird, das mit der elektronischen Vorrichtung über ein erstes Netzwerk (LCN1) kommuniziert;
- den Gatewayvorrichtungs-Berechtigungsnachweis zumindest unter Verwendung des abgeleiteten Vorrichtungsidentifikators und des Gatewayvorrichtungsidentifikators zu bestimmen;
- einen abgeleiteten Vorrichtungs-Berechtigungsnachweis (DDC) für die elektronische Vorrichtung basierend auf zumindest dem Gatewayvorrichtungs-Berechtigungsnachweis und dem elektronischen Vorrichtungsidentifikator zu erhalten;
- nach dem Empfangen der Netzwerkzugriffsanforderung an einem Authentifizierungsvorgang mit der elektronischen Vorrichtung über das zweite Netzwerk teilzunehmen und den abgeleiteten Vorrichtungs-Berechtigungsnachweis in dem Authentifizierungsvorgang mit der elektronischen Vorrichtung zu verwenden.

4. System, das zumindest zwei der folgenden Elemente umfasst: die elektronische Vorrichtung nach Anspruch 1, das Authentifizierungsunterstützungssystem nach Anspruch 2 und das Telekommunikationssystem nach Anspruch 3.

5. Elektronische Vorrichtung nach Anspruch 1 oder System nach einem der Ansprüche 2 bis 4, wobei der abgeleitete Vorrichtungsidentifikator zumindest auf dem Gatewayvorrichtungsidentifikator, dem elektronischen Vorrichtungsidentifikator und einem zusätzlichen veränderlichen Wert basiert und/oder der abgeleitete Vorrichtungs-Berechtigungsnachweis zumindest auf dem Gatewayvorrichtungs-Berechtigungsnachweis, dem elektronischen Vorrichtungsidentifikator und dem zusätzlichen veränderlichen Wert basiert.

6. Elektronische Vorrichtung nach Anspruch 1 oder System nach einem der Ansprüche 2 bis 4, wobei ein Gültigkeitsparameter kennzeichnend für die Gültigkeit des abgeleiteten Vorrichtungsidentifikators und/oder des abgeleiteten Vorrichtungs-Berechtigungsnachweises ist, wobei optional zumindest eine der folgenden Angaben für den Gültigkeitsparameter gilt:
- die elektronische Vorrichtung ist dazu ausgelegt, dem Telekommunikationssystem den Gültigkeitsparameter über das zweite Netzwerk in geschützter Form bereitzustellen;
- das Authentifizierungsunterstützungssystem dazu ausgelegt ist, den Gültigkeitsparameter an die elektronische Vorrichtung zu übertragen, und die elektronische Vorrichtung dazu ausgelegt ist, den Gültigkeitsparameter von dem Authentifizierungsunterstützungssystem zu empfangen und zu verarbeiten;
- die elektronische Vorrichtung dazu ausgelegt ist, den Gültigkeitsparameter in die Netzwerkzugriffsanforderung an das zweite Netzwerk einzubeziehen, und das Telekommunikationssystem dazu ausgelegt ist, den Gültigkeitsparameter zu empfangen und zu verarbeiten;
- die elektronische Vorrichtung und/oder das Authentifizierungsunterstützungssystem dazu ausgelegt ist, dem zweiten Netzwerk nach der Übertragung der Netzwerkzugriffsanforderung von der elektronischen Vorrichtung den Gültigkeitsparameter bereitzustellen;
- das Telekommunikationssystem dazu ausgelegt ist, die Netzwerkzugriffsanforderung basierend auf dem Gültigkeitsparameter abzulehnen.

7. Elektronische Vorrichtung nach Anspruch 1 und Anspruch 6 oder System nach einem der Ansprüche 2 bis 4 und Anspruch 6, wobei der Gültigkeitsparameter ein Gültigkeitszeitparameter ist, der kennzeichnend für die Gültigkeitszeit des abgeleiteten Vorrichtungsidentifikators und/oder des abgeleiteten Vorrichtungs-Berechtigungsnachweises ist.

8. Elektronische Vorrichtung nach Anspruch 1 oder das System nach einem der Ansprüche 2 bis 4, wobei:
- das Authentifizierungsunterstützungssystem dazu ausgelegt ist, den abgeleiteten Vorrichtungsidentifikator und/oder den abgeleiteten Vorrichtungs-Berechtigungsnachweis zumindest teilweise zu verschlüsseln und optional den zumindest teilweise verschlüsselten abgeleiteten Vorrichtungsidentifikator und/oder den abgeleiteten Vorrichtungs-Berechtigungsnachweis vorzuspeichern und den zumindest teilweise verschlüsselten abgeleiteten Vorrichtungsidentifikator und/oder den zumindest teilweise verschlüsselten abgeleiteten Vorrichtungs-Berechtigungsnachweis über das erste Netzwerk an die elektronische Vorrichtung zu übertragen;
- das elektronische Gerät dazu ausgelegt ist, den zumindest teilweise verschlüsselten abgeleiteten Vorrichtungs-Berechtigungsnachweis und/oder den zumindest teilweise verschlüsselten abgeleiteten Vorrichtungs-Berechtigungsnachweis über das erste Netzwerk von dem Authentifizierungsunterstützungssystem zu empfangen und den zumindest teilweise verschlüsselten abgeleiteten Vorrichtungsidentifikator in die Netzwerkzugriffsanforderung einzubeziehen;
- das Telekommunikationssystem dazu ausgelegt ist, den zumindest teilweise verschlüsselten abgeleiteten Vorrichtungsidentifikator in der Netzwerkzugriffsanforderung zu entschlüsseln und den entschlüsselten abgeleiteten Vorrichtungsidentifikator zu verarbeiten.

9. Elektronische Vorrichtung nach Anspruch 1 oder Authentifizierungsunterstützungssystem nach Anspruch 2, wobei
- die elektronische Vorrichtung dazu ausgelegt ist, den elektronischen Vorrichtungsidentifikator dem Authentifizierungsunterstützungssystem in sicherer Weise über das erste Netzwerk bereitzustellen;
- das Authentifizierungsunterstützungssystem dazu ausgelegt ist, den elektronischen Vorrichtungsidentifikator von der elektronischen Vorrichtung auf sichere Weise über das erste Netzwerk zu empfangen.

10. Elektronische Vorrichtung nach Anspruch 1 oder Authentifizierungsunterstützungssystem nach Anspruch 2, wobei das erste Netzwerk ein lokales Netzwerk ist und der elektronische Vorrichtungsidentifikator ein lokaler Netzwerkidentifikator, wie beispielsweise eine MAC-Adresse, der elektronischen Vorrichtung ist.

11. Elektronische Vorrichtung nach Anspruch 1 oder Authentifizierungsunterstützungssystem nach Anspruch 2, wobei
- das Authentifizierungsunterstützungssystem in der Gatewayvorrichtung untergebracht ist; oder
- das Authentifizierungsunterstützungssystem dazu ausgelegt ist, den Gatewayvorrichtungsidentifikator und den zumindest einen zugeordneten Gatewayvorrichtungs-Berechtigungsnachweis über das erste Netzwerk zu erhalten.

12. Elektronische Vorrichtung nach Anspruch 1 oder Telekommunikationssystem nach Anspruch 3, wobei
- die elektronische Vorrichtung dazu ausgelegt ist, die Netzwerkzugriffsanforderung zu konstruieren, um das Telekommunikationssystem in die Lage zu versetzen, den abgeleiteten Vorrichtungsidentifikator in der Netzwerkzugriffsanforderung zu erkennen;
- das Telekommunikationssystem dazu ausgelegt ist, den abgeleiteten Vorrichtungsidentifikator in der empfangenen Netzwerkzugriffsanforderung zu erkennen.

13. Elektronische Vorrichtung nach Anspruch 1 oder Telekommunikationssystem nach Anspruch 3, wobei
- die elektronische Vorrichtung dazu ausgelegt ist, unter Verwendung des abgeleiteten Vorrichtungs-Berechtigungsnachweises an einem erneuten Authentifizierungsvorgang mit dem Telekommunikationssystem teilzunehmen;
- das Telekommunikationssystem dazu ausgelegt ist, an einem erneuten Authentifizierungsvorgang mit der elektronischen Vorrichtung unter Verwendung des abgeleiteten Vorrichtungs-Berechtigungsnachweises teilzunehmen, und wobei, optional, das Telekommunikationssystem dazu ausgelegt ist, den abgeleiteten Vorrichtungs-Berechtigungsnachweis für den erneuten Authentifizierungsvorgang basierend auf dem empfangenen abgeleiteten Vorrichtungsidentifikator neu zu berechnen.

14. Elektronische Vorrichtung nach Anspruch 1 oder Telekommunikationssystem nach Anspruch 3, wobei das zweite Netzwerk ein 5G-Telekommunikationsnetzwerk ist und wobei zumindest einer der folgenden Punkte zutrifft:
- der Gatewayvorrichtungsidentifikator ist ein Subskription Permanent Identifier, SUPI;
- die Netzwerkzugriffsanforderung ist eine Registrierungsanforderung von der elektronischen Vorrichtung an ein System, das eine Access and Mobility Management Function, AMF, im 5G-Telekommunikationsnetz betreibt;
- der abgeleitete Vorrichtungsidentifikator ein SUPI-Format oder ein verborgenes SUPI-Format, SUCI, aufweist, wobei optional ein SUPI-Format-Typfeld das Vorhandensein eines abgeleiteten Vorrichtungsidentifikators signalisiert;
- der abgeleitete Vorrichtungsidentifikator ist teilweise in einem verborgenen SUPI-Format, SUCI, verschlüsselt.

15. Authentifizierungsunterstützungssystem nach Anspruch 2 oder das Telekommunikationssystem nach Anspruch 3, wobei;
- das Authentifizierungsunterstützungssystem dazu ausgelegt ist, zumindest einen von dem abgeleiteten Vorrichtungsidentifikator, dem abgeleiteten Vorrichtungs-Berechtigungsnachweis und einem Gültigkeitszeitparameter zu speichern, der kennzeichnend für eine Gültigkeitszeit von zumindest einem von dem abgeleiteten Vorrichtungsidentifikator und dem abgeleiteten Vorrichtungs-Berechtigungsnachweis ist, und wobei das Authentifizierungsunterstützungssystem dazu ausgelegt ist, zumindest einen von dem gespeicherten abgeleiteten Vorrichtungsidentifikator, dem abgeleiteten Vorrichtungs-Berechtigungsnachweis und dem Gültigkeitszeitparameter dem Telekommunikationssystem in einem von dem Authentifizierungsvorgang getrennten Vorgang bereitzustellen;
- das Telekommunikationssystem dazu ausgelegt ist, zumindest einen von dem gespeicherten abgeleiteten Vorrichtungsidentifikator, dem abgeleiteten Vorrichtungs-Berechtigungsnachweis und einem Gültigkeitszeitparameter, der kennzeichnend für eine Gültigkeitszeit von zumindest einem von dem abgeleiteten Vorrichtungsidentifikator und dem abgeleiteten Vorrichtungs-Berechtigungsnachweis ist, von dem Authentifizierungsunterstützungssystem in einem von dem Authentifizierungsvorgang getrennten Vorgang zu erhalten.

16. Authentifizierungsunterstützungssystem nach Anspruch 2 oder das Telekommunikationssystem nach Anspruch 3, wobei
- das Authentifizierungsunterstützungssystem dazu ausgelegt ist, die Authentifizierungsunterstützungsfunktion durch Ausführen einer Einwegfunktion durchzuführen, um den abgeleiteten Vorrichtungs-Berechtigungsnachweis aus zumindest dem Gatewayvorrichtungs-Berechtigungsnachweis und dem elektronischen Vorrichtungsidentifikator zu erhalten;
das Telekommunikationssystem dazu ausgelegt ist, eine Einwegfunktion auszuführen, um den abgeleiteten Vorrichtungs-Berechtigungsnachweis aus zumindest dem Gatewayvorrichtungs-Berechtigungsnachweis und dem elektronischen Vorrichtungsidentifikator zu erhalten.

## Revendications

1. Dispositif électronique (UE1) configuré pour communiquer sur un premier réseau (LC1) avec un système de prise en charge d'authentification (10) et sur un second réseau avec un système de télécommunication par l'intermédiaire d'un dispositif passerelle (GW), dans lequel le dispositif électronique n'a pas d'abonnement pour accéder au second réseau et le dispositif passerelle a un abonnement pour accéder au second réseau, l'abonnement comportant un identifiant de dispositif passerelle (GDI) et au moins un justificatif de dispositif passerelle (GDC) associé connu dans le système de télécommunication, et dans lequel l'identifiant de dispositif passerelle et l'au moins un justificatif de dispositif passerelle associé peuvent être obtenus par le système de prise en charge d'authentification,
dans lequel le dispositif électronique est configuré pour :
- fournir un identifiant de dispositif électronique (EDI) sur le premier réseau au système de prise en charge d'authentification ;
- recevoir sur le premier réseau, au moins :
i) un identifiant de dispositif dérivé (DDI) obtenu à partir du système de prise en charge d'authentification en fonction au moins de l'identifiant de dispositif passerelle et de l'identifiant de dispositif électronique ;
ii) un justificatif de dispositif dérivé (DDC) obtenu auprès du système prise en charge d'authentification en fonction au moins du justificatif de dispositif passerelle et de l'identifiant de dispositif électronique ;
- stocker l'identifiant de dispositif dérivé et le justificatif de dispositif dérivé dans le dispositif électronique ;
- inclure l'identifiant de dispositif dérivé reçu sur le premier réseau dans une demande d'accès au réseau ;
- transmettre la demande d'accès au réseau comportant l'identifiant de dispositif dérivé sur le second réseau au système de télécommunication ;
- participer à une procédure d'authentification avec le système de télécommunication sur le second réseau après avoir transmis la demande d'accès au réseau et utiliser l'identifiant de dispositif dérivé dans la procédure d'authentification avec le système de télécommunication.

2. Système de prise en charge d'authentification (10) configuré pour communiquer sur un premier réseau (LCN1) avec un dispositif électronique (UE1), dans lequel le dispositif électronique est en mesure de communiquer avec un système de télécommunication sur un second réseau par l'intermédiaire d'un dispositif passerelle (GW) et n'a pas d'abonnement pour accéder au second réseau, dans lequel le dispositif passerelle a un abonnement pour accéder au second réseau, l'abonnement comportant un identifiant de dispositif passerelle (GDI) et au moins un justificatif de dispositif passerelle (GDC) associé connu dans le système de télécommunication,
dans lequel le système de prise en charge d'authentification est configuré pour :
- recevoir un identifiant de dispositif électronique (EDI) en provenance du dispositif électronique sur le premier réseau ;
- obtenir l'identifiant de dispositif passerelle et au moins un justificatif de dispositif passerelle associé du dispositif passerelle,
- réaliser une fonction de prise en charge d'authentification, pour que le dispositif électronique accède au second réseau à l'aide d'une demande d'accès au réseau, afin d'obtenir au moins :
i) un identifiant de dispositif dérivé (DDI) obtenu par la fonction de prise en charge d'authentification en fonction au moins de l'identifiant de dispositif passerelle et de l'identifiant de dispositif électronique ;
ii) un justificatif de dispositif dérivé (DDC) obtenu par la fonction de prise en charge d'authentification en fonction au moins de l'identifiant de dispositif passerelle et de l'identifiant de dispositif électronique ;
- transmettre l'identifiant de dispositif dérivé et le justificatif de dispositif dérivé sur le premier réseau au dispositif électronique.

3. Système de télécommunication pour un second réseau stockant un abonnement d'un dispositif passerelle (GW), l'abonnement comportant un identifiant de dispositif passerelle (GDI) et au moins un justificatif de dispositif passerelle (GDC) associé, dans lequel le système de télécommunication est configuré pour :
- recevoir une demande d'accès au réseau sur le second réseau en provenance d'un dispositif électronique (UE1) n'ayant pas d'abonnement pour accéder au second réseau ;
- reconnaître un identifiant de dispositif dérivé (DDI) dans la demande d'accès au réseau, dans lequel l'identifiant de dispositif dérivé est obtenu en fonction au moins de l'identifiant de dispositif passerelle et d'un identifiant de dispositif électronique (EDI) dans un système de prise en charge d'authentification (10) communiquant avec le dispositif électronique sur un premier réseau (LCN1) ;
- déterminer le justificatif de dispositif passerelle à l'aide au moins de l'identifiant de dispositif dérivé et de l'identifiant de dispositif passerelle ;
- obtenir un justificatif de dispositif dérivé (DDC) pour le dispositif électronique en fonction au moins du justificatif de dispositif passerelle et de l'identifiant de dispositif électronique ;
- participer à une procédure d'authentification avec le dispositif électronique sur le second réseau après avoir reçu la demande d'accès au réseau et utiliser le justificatif de dispositif dérivé dans la procédure d'authentification avec le dispositif électronique.

4. Système comprenant au moins deux du dispositif électronique selon la revendication 1, du système de prise en charge d'authentification selon la revendication 2 et du système de télécommunication selon la revendication 3.

5. Dispositif électronique selon la revendication 1 ou système selon une des revendications 2 à 4, dans lequel l'identifiant de dispositif dérivé est fonction au moins de l'identifiant de dispositif passerelle, de l'identifiant de dispositif électronique et d'une valeur modifiable supplémentaire et/ou le justificatif de dispositif dérivé est fonction au moins du justificatif de dispositif passerelle, de l'identifiant de dispositif électronique et de la valeur modifiable supplémentaire.

6. Dispositif électronique selon la revendication 1 ou système selon l'une des revendications 2 à 4, dans lequel un paramètre de validité est indicatif d'une validité d'au moins un de l'identifiant de dispositif dérivé et du justificatif de dispositif dérivé, dans lequel, éventuellement, au moins une des affirmations suivantes s'applique au paramètre de validité :
- le dispositif électronique est configuré pour fournir le paramètre de validité au système de télécommunication sur le second réseau sous forme protégée ;
- le système de prise en charge d'authentification est configuré pour transmettre le paramètre de validité au dispositif électronique et le dispositif électronique est configuré pour recevoir et traiter le paramètre de validité en provenance du système de prise en charge d'authentification ;
- le dispositif électronique est configuré pour inclure le paramètre de validité dans la demande d'accès au réseau au second réseau et le système de télécommunication est configuré pour recevoir et traiter le paramètre de validité ;
- le dispositif électronique et/ou le système de prise en charge d'authentification est configuré pour fournir le paramètre de validité au second réseau après la transmission de la demande d'accès au réseau à partir du dispositif électronique ;
- le système de télécommunication est configuré pour refuser la demande d'accès au réseau en fonction du paramètre de validité.

7. Dispositif électronique selon la revendication 1 et la revendication 6 ou système selon l'une des revendications 2 à 4 et la revendication 6, dans lequel le paramètre de validité est un paramètre de temps de validité indiquant une durée de validité d'au moins un de l'identifiant de dispositif dérivé et du justificatif de dispositif dérivé.

8. Dispositif électronique selon la revendication 1 ou système selon l'une des revendications 2 à 4, dans lequel :
- le système de prise en charge d'authentification est configuré pour crypter au moins partiellement l'identifiant de dispositif dérivé et/ou justificatif de dispositif dérivé et, éventuellement, préstocker l'identifiant de dispositif dérivé et/ou justificatif de dispositif dérivé au moins partiellement crypté et transmettre l'identifiant de dispositif dérivé au moins partiellement crypté et/ou le justificatif de dispositif dérivé au moins partiellement crypté sur le premier réseau au dispositif électronique ;
- le dispositif électronique est configuré pour recevoir le justificatif de dispositif dérivé au moins partiellement crypté et/ou le justificatif de dispositif dérivé au moins partiellement crypté sur le premier réseau en provenance du système de prise en charge d'authentification et inclure l'identifiant de dispositif dérivé au moins partiellement crypté dans la demande d'accès au réseau ;
- le système de télécommunication est configuré pour décrypter l'identifiant de dispositif dérivé au moins partiellement crypté dans la demande d'accès au réseau et traiter l'identifiant de dispositif dérivé décrypté.

9. Dispositif électronique selon la revendication 1 ou système de prise en charge d'authentification selon la revendication 2, dans lequel
- le dispositif électronique est configuré pour fournir l'identifiant de dispositif électronique au système de prise en charge d'authentification de manière sécurisée sur le premier réseau ;
- le système de prise en charge d'authentification est configuré pour recevoir l'identifiant de dispositif électronique en provenance du dispositif électronique de manière sécurisée sur le premier réseau.

10. Dispositif électronique selon la revendication 1 ou système de prise en charge d'authentification selon la revendication 2, dans lequel le premier réseau est un réseau local et l'identifiant de dispositif électronique est un identifiant de réseau local, tel qu'une adresse MAC, du dispositif électronique.

11. Dispositif électronique selon la revendication 1 ou système de prise en charge d'authentification selon la revendication 2, dans lequel
- le système de prise en charge d'authentification est intégré au dispositif passerelle ; ou
- le système de prise en charge d'authentification est configuré pour obtenir l'identifiant de dispositif passerelle et l'au moins un justificatif de dispositif passerelle associé sur le premier réseau.

12. Dispositif électronique selon la revendication 1 ou système de télécommunication selon la revendication 3, dans lequel
- le dispositif électronique est configuré pour construire la demande d'accès au réseau afin de permettre au système de télécommunication de reconnaître l'identifiant de dispositif dérivé dans la demande d'accès au réseau ;
- le système de télécommunication est configuré pour reconnaître l'identifiant de dispositif dérivé dans la demande d'accès au réseau reçue.

13. Dispositif électronique selon la revendication 1 ou système de télécommunication selon la revendication 3, dans lequel
- le dispositif électronique est configuré pour participer à une procédure de réauthentification avec le système de télécommunication à l'aide du justificatif de dispositif dérivé ;
- le système de télécommunication est configuré pour participer à une procédure de réauthentification avec le dispositif électronique à l'aide du justificatif de dispositif dérivé, et dans lequel, éventuellement, le système de télécommunication est configuré pour recalculer le justificatif de dispositif dérivé pour la procédure de réauthentification en fonction de l'identifiant de dispositif dérivé reçu.

14. Dispositif électronique selon la revendication 1 ou système de télécommunication selon la revendication 3, dans lequel le second réseau est un réseau de télécommunications 5G et dans lequel au moins une des affirmations suivantes s'applique :
- l'identifiant de dispositif passerelle est un identifiant permanent d'abonnement, SUPI ;
- la demande d'accès au réseau est une demande d'enregistrement émise par le dispositif électronique auprès d'un système exécutant une fonction de gestion d'accès et de mobilité, AMF, dans le réseau de télécommunications 5G ;
- l'identifiant de dispositif dérivé a un format SUPI ou un format SUPI caché, SUCI, dans lequel, éventuellement, un champ de type de format SUPI signale la présence d'un identifiant de dispositif dérivé.
- l'identifiant de dispositif dérivé est partiellement crypté dans un format SUPI caché, SUCI.

15. Système de prise en charge d'authentification selon la revendication 2 ou système de télécommunication selon la revendication 3, dans lequel :
- le système de prise en charge d'authentification est configuré pour stocker au moins un de l'identifiant de dispositif dérivé, du justificatif de dispositif dérivé et d'un paramètre de temps de validité indicatif d'une durée de validité d'au moins un de l'identifiant de dispositif dérivé et du justificatif de dispositif dérivé, et dans lequel le système de prise en charge d'authentification est configuré pour fournir au moins un de l'identifiant de dispositif dérivé, du justificatif de dispositif dérivé et du paramètre de temps de validité stockés au système de télécommunication dans une procédure distincte de la procédure d'authentification ;
- le système de télécommunication est configuré pour obtenir au moins un de l'identifiant de dispositif dérivé stocké, du justificatif de dispositif dérivé stocké et d'un paramètre de temps de validité stocké indicatif d'une durée de validité d'au moins un de l'identifiant de dispositif dérivé et du justificatif de dispositif dérivé auprès du système de prise en charge d'authentification dans une procédure distincte de la procédure d'authentification.

16. Système de prise en charge d'authentification selon la revendication 2 ou système de télécommunication selon la revendication 3, dans lequel
- le système de prise en charge d'authentification est configuré pour réaliser la fonction de prise en charge d'authentification en exécutant une fonction unidirectionnelle pour obtenir le justificatif de dispositif dérivé à partir au moins du justificatif de dispositif passerelle et de l'identifiant de dispositif électronique ;
- le système de télécommunication est configuré pour exécuter une fonction unidirectionnelle afin d'obtenir le justificatif de dispositif dérivé à partir au moins du justificatif de dispositif passerelle et de l'identifiant de dispositif électronique.
